(19) Europäisches Patentamt
European Patent Office
Office européen des brevets

(11) **EP 4 712 632 A1**

(12) **EUROPEAN PATENT APPLICATION**
published in accordance with Art. 153(4) EPC

(43) Date of publication:
**18.03.2026 Bulletin 2026/12**

(21) Application number: **24818511.8**

(22) Date of filing: **24.05.2024**

(51) International Patent Classification (IPC):
**H04W 72/0453** *(2023.01)* **H04W 28/20** *(2009.01)*
**H04W 16/14** *(2009.01)*

(52) Cooperative Patent Classification (CPC):
**H04L 5/00; H04W 16/14; H04W 28/20;**
**H04W 72/0453; H04W 72/20; H04W 72/50**

(86) International application number:
**PCT/CN2024/095149**

(87) International publication number:
**WO 2024/250978 (12.12.2024 Gazette 2024/50)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.06.2023 CN 202310673026**

(71) Applicant: **Huawei Technologies Co., Ltd.**
**Shenzhen, Guangdong 518129 (CN)**

(72) Inventors:
• **PENG, Xiaohui**
  **Shenzhen, Guangdong 518129 (CN)**

• **QIAN, Bin**
  **Shenzhen, Guangdong 518129 (CN)**
• **LIU, Chenchen**
  **Shenzhen, Guangdong 518129 (CN)**
• **HUANG, Lei**
  **Shenzhen, Guangdong 518129 (CN)**
• **YANG, Xun**
  **Shenzhen, Guangdong 518129 (CN)**
• **ZHANG, Tingting**
  **Shenzhen, Guangdong 518055 (CN)**

(74) Representative: **MERH-IP Matias Erny Reichl**
**Hoffmann**
**Patentanwälte PartG mbB**
**Paul-Heyse-Straße 29**
**80336 München (DE)**

(54) **INFORMATION INTERACTION METHOD AND APPARATUS IN UWB SYSTEM**

(57) This application relates to an information exchange method and an apparatus in a UWB system. The method includes: Two communication parties exchange a control message, for indicating a frequency band overlapping rate between adjacent channels in a channel set used for frequency band stitching; and when the frequency band overlapping rate belongs to an overlapping rate set $S_1$, the channel set is in an in-sequence channel order; or when the frequency band overlapping rate belongs to an overlapping rate set $S_2$, the channel set is in an out-of-sequence channel order. According to this application, a better compromise between sending time and transmit power in a frequency band stitching process can be implemented. This application is applied to a UWB-based WPAN system, a sensing system, or the like, including 802.15 series protocols, for example, 802.15.4ab or a next-generation standard of 802.15.4ab. This application may be further applied to a WLAN system supporting 802.11 series protocols such as a next-generation protocol of 802.11ax like 802.11be, or EHT, a next-generation protocol of 802.11be like Wi-Fi 8 or UHR, or Wi-Fi AI.

EP 4 712 632 A1

First
communication
apparatus

Second
communication
apparatus

S101: Determine a frequency band
overlapping rate O between adjacent
channels in a channel set A used for
frequency band stitching

S102: Determine, based on the
frequency band overlapping rate O,
whether the channel set A is in an in-
sequence channel order or an out-of-
sequence channel order, where when
the frequency band overlapping rate O
belongs to a preset first overlapping
rate set, the channel set A is in the in-
sequence channel order; or when the
frequency band overlapping rate O
belongs to a preset second overlapping
rate set, the channel set A is in the out-
of-sequence channel order

S103: Send a control message, where the control
message indicates the frequency band
overlapping rate O

S104: Determine, based on the frequency
band overlapping rate O indicated by the
control message, whether the channel set A
is in the in-sequence channel order or the
out-of-sequence channel order

FIG. 6

## Description

This application claims priority to Chinese Patent Application No. 202310673026.1, filed with the China National Intellectual Property Administration on June 7, 2023 and entitled "INFORMATION EXCHANGE METHOD AND APPARATUS IN UWB SYSTEM", which is incorporated herein by reference in its entirety.

## TECHNICAL FIELD

This application relates to the field of communication technologies, and in particular, to an information exchange method and an apparatus in an ultra-wideband (ultra-wideband, UWB) system.

## BACKGROUND

As ultra-wideband (ultra-wideband, UWB) enters the civilian field, ultra-wideband (UWB) wireless communication has become one of physical layer technologies for short-range and high-speed wireless networks. An ultra-wideband (UWB) technology is a wireless carrier communication technology that can transmit data, for example, by using nanosecond-level non-sinusoidal wave narrow pulses, and therefore, occupies a very wide spectrum range. Due to its narrow pulses and low radiation spectrum density, a UWB system has advantages of a strong multipath resolution capability, low power consumption, high confidentiality, and the like, and is mainly applied to sensing and ranging scenarios.

The institute of electrical and electronics engineers (institute of electrical and electronics engineers, IEEE) has incorporated the UWB technology into IEEE 802 series wireless standards and has released a high-speed wireless personal area network (wireless personal area network, WPAN) standard IEEE 802.15.4a based on the UWB technology, and an evolved version IEEE 802.15.4z of IEEE 802.15.4a. A next-generation UWB wireless personal area network (WPAN) standard 802.15.4ab is under discussion. One of focuses of 802.15.4ab is use of UWB pulses for sensing. In a sensing application, information such as a distance, an angle, and a speed of a target is extracted by detecting an echo of a UWB signal on the target (target). Sensing performance is directly proportional to an effective bandwidth. That is, a wider effective bandwidth indicates higher sensing precision. However, limited by performance of an analog-to-digital converter (analog digital converter, ADC), a UWB device with low costs and low power consumption is incapable of processing a high-bandwidth signal. In a possible solution, a plurality of frequency bands with bandwidths of 499.2 MHz (megahertz) are stitched to form a frequency band with a wider bandwidth, to improve sensing performance of the UWB device with low costs and low power consumption.

Currently, before frequency band stitching, a transmit end and a receive end need to align a channel use sequence in a frequency band stitching process. However, the channel use sequence in the frequency band stitching process is to be explored.

## SUMMARY

Embodiments of this application provide an information exchange method and an apparatus in a UWB system. A channel use sequence in a frequency band stitching process is designed based on comprehensive consideration of sending time and transmit power backoff in the frequency band stitching process, to implement a better compromise between the sending time and transmit power in the frequency band stitching process.

The following describes this application from different aspects. It should be understood that, for the following implementations and beneficial effect of the different aspects, refer to each other.

According to a first aspect, this application provides an information exchange method in a UWB system. The method is applied to a first communication apparatus, and the method includes: determining a frequency band overlapping rate between adjacent channels in a channel set used for frequency band stitching; and sending a control message, where the control message indicates the frequency band overlapping rate. When the frequency band overlapping rate belongs to a preset first overlapping rate set, the channel set is in an in-sequence channel order; or when the frequency band overlapping rate belongs to a preset second overlapping rate set, the channel set is in an out-of-sequence channel order. The in-sequence channel order and the out-of-sequence channel order may be distinguished based on whether different channels in the channel set are in ascending order or descending order of center frequencies.

In this application, the in-sequence channel order (or using channels in sequence, in-sequence channel order) meets that different channels are in ascending order or descending order of center frequencies, and the out-of-sequence channel order (or using channels out of sequence, out-of-sequence channel order) does not meet that different channels are in ascending order or descending order of center frequencies. The out-of-sequence channel order may meet that a frequency band overlapping rate between channels that are adjacent in transmission time is less than or equal to a first preset threshold, and a transmission start time interval of signals on channels between which a frequency band overlapping rate is greater than or equal to a second preset threshold is greater than or equal to 1 millisecond. It may be understood that, when both the first preset threshold and the second preset threshold are 0, the out-of-sequence channel order meets that there is no overlapping between channels that are adjacent in transmission time, and a transmission start time interval of signals on channels that overlap in frequency domain is greater than or equal to 1 millisecond.

In this application, the "channel set used for frequency band stitching" includes a plurality of channels, and the plurality of channels are distributed with an equal center frequency spacing (for example, the center frequency spacing is 124.8 MHz, 249.6 MHz, or 374.4 MHz). For example, a bandwidth of each channel in the channel set used for frequency band stitching is 499.2 MHz.

Because the in-sequence channel order is not limited by a 1-millisecond transmission time interval, total sending time of signals when the in-sequence channel order is used may be less than total sending time of the signals when the out-of-sequence channel order is used. In addition, total sending time required by signals in a frequency band stitching process needs to be less than channel correlation time, and the channel correlation time depends on an application scenario, and usually ranges from several nanoseconds to several milliseconds. Therefore, using the in-sequence channel order in frequency band stitching can meet correlation time requirements in more scenarios. However, because transmit power of UWB is limited, when the in-sequence channel order is used in frequency band stitching, overlapping of adjacent channels in frequency domain causes accumulation of power spectral densities. As a result, transmit power of signals on the adjacent channels is reduced, and sensing performance and a sensing range are further reduced.

Therefore, in this application, the sending time and transmit power backoff in the frequency band stitching process are comprehensively considered, and the in-sequence channel order or the out-of-sequence channel order is selected based on the frequency band overlapping rate. This can implement a better compromise between the sending time and the transmit power in frequency band stitching. In addition, the frequency band overlapping rate can be flexibly selected based on an application scenario.

According to a second aspect, this application provides an information exchange method in a UWB system. The method is applied to a second communication apparatus, and the method includes: receiving a control message, where the control message indicates a frequency band overlapping rate between adjacent channels in a channel set used for frequency band stitching; and determining, based on the frequency band overlapping rate indicated by the control message, whether the channel set is in an in-sequence channel order or an out-of-sequence channel order. When the frequency band overlapping rate belongs to a preset first overlapping rate set, the channel set is in the in-sequence channel order; or when the frequency band overlapping rate belongs to a preset second overlapping rate set, the channel set is in the out-of-sequence channel order. The in-sequence channel order and the out-of-sequence channel order may be distinguished based on whether different channels in the channel set are in ascending order or descending order of center frequencies.

According to a third aspect, this application provides a communication apparatus. The communication apparatus may be the first communication apparatus in the first aspect, or a chip, a functional module, or the like configured in the first communication apparatus, and the communication apparatus includes a processing unit and a transceiver unit. The processing unit is configured to determine a frequency band overlapping rate between adjacent channels in a channel set used for frequency band stitching; and the transceiver unit is configured to send a control message, where the control message indicates the frequency band overlapping rate. When the frequency band overlapping rate belongs to a preset first overlapping rate set, the channel set is in an in-sequence channel order; or when the frequency band overlapping rate belongs to a preset second overlapping rate set, the channel set is in an out-of-sequence channel order. The in-sequence channel order and the out-of-sequence channel order may be distinguished based on whether different channels in the channel set are in ascending order or descending order of center frequencies.

According to a fourth aspect, this application provides a communication apparatus. The communication apparatus may be the second communication apparatus in the second aspect, or a chip, a functional module, or the like configured in the second communication apparatus, and the communication apparatus includes a processing unit and a transceiver unit. The transceiver unit is configured to receive a control message, where the control message indicates a frequency band overlapping rate between adjacent channels in a channel set used for frequency band stitching; and the processing unit is configured to determine, based on the frequency band overlapping rate indicated by the control message, whether the channel set is in an in-sequence channel order or an out-of-sequence channel order. When the frequency band overlapping rate belongs to a preset first overlapping rate set, the channel set is in the in-sequence channel order; or when the frequency band overlapping rate belongs to a preset second overlapping rate set, the channel set is in the out-of-sequence channel order. The in-sequence channel order and the out-of-sequence channel order may be distinguished based on whether different channels in the channel set are in ascending order or descending order of center frequencies.

In a possible implementation of any one of the foregoing aspects, the first overlapping rate set includes a frequency band overlapping rate of 25%, and the second overlapping rate set includes a frequency band overlapping rate of 50% and a frequency band overlapping rate of 75%. Alternatively, the first overlapping rate set includes a frequency band overlapping rate of 25% and a frequency band overlapping rate of 50%, and the second overlapping rate set includes a frequency band overlapping rate of 75%. Alternatively, the first overlapping rate set includes a frequency band overlapping rate of 20% and a frequency band overlapping rate of 40%, and the second overlapping rate set includes a frequency band overlapping rate of 60% and a frequency band overlapping rate of 80%. In this application, the frequency band overlapping rates included in the first overlapping rate set and the second overlapping rate set may be set based on an actual situation, and are not enumerated in this application. This is merely an example for description, and does not constitute a limitation on the protection scope of this application.

Optionally, the first overlapping rate set and the second overlapping rate set may be obtained through division based on an overlapping rate threshold. For example, a frequency band overlapping rate that is in a candidate overlapping rate set and that is less than or equal to an overlapping rate threshold may be used as the first overlapping rate set, and a frequency band overlapping rate that is in the candidate overlapping rate set and that is greater than the overlapping rate threshold may be used as the second overlapping rate set. The candidate overlapping rate set may include the following plurality of frequency band overlapping rates: 25%, 50%, 75%, 20%, 40%, 60%, or 80%.

Optionally, the overlapping rate threshold is a frequency band overlapping rate obtained when an intersection point of power spectral densities (power spectrum density, PSD) of signals transmitted on two adjacent channels is equal to -3 dBr. Alternatively, the overlapping rate threshold may be a minimum frequency band overlapping rate obtained when a sum of power spectral densities of signals transmitted on two adjacent channels exceeds 0 dBr. "dBr" represents decibels relative to a reference level (decibels relative to reference level, dBr), and the reference level herein means that a maximum value of a power spectral density of a signal on a channel is 0 dBr. A same expression in the following indicates a same meaning. Details are not described again.

In a possible implementation of any one of the foregoing aspects, the control message further indicates one or more of the following: a quantity m of channels used for frequency band stitching, a channel number of a reference channel, or whether center frequencies of channels used for frequency band stitching that start from the reference channel are in ascending order or descending order.

In a possible implementation of any one of the foregoing aspects, a channel use sequence of channels in the channel set used for frequency band stitching satisfies:

$$CH((p*(b+1) \text{ MOD } (N)) + (p*(b+1) \text{ DIV } (N))).$$

Values of p are respectively 0, 1, 2, ..., and (N-1). If the quantity m of channels used for frequency band stitching is an integer multiple of (b+1), N is equal to m; or if the quantity m of channels used for frequency band stitching is not an integer multiple of (b+1), N is a minimum integer multiple of (b+1) in positive integers greater than m. CH() represents a logical index of a channel. In this application, the logical index of the channel corresponds to a channel number of the channel, and the channel (or a frequency band) can be uniquely found by using the logical index of the channel. b represents a coefficient corresponding to a frequency band overlapping rate. When the frequency band overlapping rate indicated by the control message is 25%, a value of b is 0; when the frequency band overlapping rate indicated by the control message is 50%, a value of b is 1; or when the frequency band overlapping rate indicated by the control message is 75%, a value of b is 2.

In this application, MOD represents a modulo operation, and DIV represents integer division. Details are not described below again. For integer division (DIV), x DIV y is equal to an integer part of a quotient of x and y. In this application, the symbol "*" represents a meaning of multiplication or multiplied by, and details are not described below again.

In addition, the channel use sequence of the channels in the channel set used for frequency band stitching may further meet any one of the following conditions: For different values of p*(b+1) DIV (N), a transmission start time interval of signals on channels is greater than or equal to 1 millisecond; or a transmission start time interval of signals on two channels between which a frequency band overlapping rate exceeds 25% in the channel set used for frequency band stitching is greater than or equal to 1 millisecond.

In a possible implementation of any one of the foregoing aspects, a channel use sequence of channels in the channel set used for frequency band stitching satisfies:

$$CH(((p*b) \text{ MOD } (N)) + (p*b) \text{ DIV } (N)).$$

Values of p are respectively 0, 1, 2, ..., and (N-1). If the quantity m of channels used for frequency band stitching is an integer multiple of b, N is equal to m; or if the quantity m of channels used for frequency band stitching is not an integer multiple of b, N is a minimum integer multiple of b in positive integers greater than m. CH() represents a logical index of a channel. In this application, the logical index of the channel corresponds to a channel number of the channel, and the channel (or a frequency band) can be uniquely found by using the logical index of the channel. b represents a coefficient corresponding to a frequency band overlapping rate. When the frequency band overlapping rate indicated by the control message is 25%, a value of b is 1; when the frequency band overlapping rate indicated by the control message is 50%, a value of b is 2; or when the frequency band overlapping rate indicated by the control message is 75%, a value of b is 3.

In addition, the channel use sequence of the channels in the channel set used for frequency band stitching may further meet any one of the following conditions: For different values of (p*OF) DIV (N), a transmission start time interval of signals on channels is greater than or equal to 1 millisecond; or transmission start time of signals on two channels between which a frequency band overlapping rate exceeds 25% in the channel set used for frequency band stitching is greater than or equal to 1 millisecond.

In a possible implementation of any one of the foregoing aspects, a channel use sequence of channels in the channel set meets one or more of the following: When the frequency band overlapping rate is 25%, the channels in the channel set are sequentially transmitted in ascending order or descending order of center frequencies; when the frequency band overlapping rate is 50%, a center frequency spacing between channels that are adjacent in transmission time in the channel set is greater than or equal to 499.2 MHz; or when the frequency band overlapping rate is 75%, a center frequency spacing between channels that are adjacent in transmission time in the channel set is greater than or equal to 374.4 MHz. When frequency band overlapping rates are of different values, for details of the channel use sequence of the channels in the channel set used for frequency band stitching, refer to the following descriptions of specific implementations. Details are not described herein.

In this application, a rule of the channel use sequence in frequency band stitching is set. This can shorten frequency band stitching time, and can also maintain good sensing performance and a large sensing range in some scenarios.

In a possible implementation of any one of the foregoing aspects, the control message further indicates one or more of the following: whether frequency band stitching is enabled, a frequency band stitching mode, the coefficient b corresponding to the frequency band overlapping rate, or a manner of setting the channel use sequence of the channels in the channel set. The frequency band stitching mode includes frequency band stitching using the in-sequence channel order and frequency band stitching using the out-of-sequence channel order. There are two manners of setting the channel use sequence of the channels in the channel set: setting the channel use sequence according to CH((p*(b+1) MOD (N)) + (p*(b+1) DIV (N))), and setting the channel use sequence according to CH(((p*b) MOD (N)) + (p*b) DIV (N)).

In this application, configuring the coefficient b and the manner of setting the channel use sequence in the control message can shorten frequency band stitching time, and can also improve flexibility of the channel use sequence.

According to a fifth aspect, this application provides an information exchange method in a UWB system. The method is applied to a first communication apparatus, and the method includes: generating and sending a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order. The control message may be further used to determine a channel use sequence of channels in the channel set. A reference signal in this application may also be referred to as a base channel (base channel).

In this application, the channel use sequence is aligned between a transmit end and a receive end based on the control message, to support implementation of a frequency band stitching solution and improve sensing performance.

According to a sixth aspect, this application provides an information exchange method in a UWB system. The method is applied to a second communication apparatus, and the method includes: receiving a control message, and determining, based on the control message, a channel use sequence of channels in a channel set used for frequency band stitching. The control message indicates: a frequency band overlapping rate between adjacent channels in the channel set used for frequency band stitching, a quantity m of channels used for frequency band stitching, a channel number of a reference channel, and whether center frequencies of channels used for frequency band stitching that start from the reference channel are in ascending order or descending order.

According to a seventh aspect, this application provides a communication apparatus. The communication apparatus may be the first communication apparatus in the fifth aspect, or a chip, a functional module, or the like configured in the first communication apparatus, and the communication apparatus includes a processing unit and a transceiver unit. The processing unit is configured to generate a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the transceiver unit is configured to send the control message. The control message may be further used to determine a channel use sequence of channels in the channel set.

According to an eighth aspect, this application provides a communication apparatus. The communication apparatus may be the second communication apparatus in the sixth aspect, or a chip, a functional module, or the like configured in the second communication apparatus, and the communication apparatus includes a processing unit and a transceiver unit. The transceiver unit is configured to receive a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the processing unit is configured to determine a channel use sequence of channels in the channel set based on the control message.

With reference to any one of the fifth aspect to the eighth aspect, in a possible implementation, the channel use sequence satisfies CH((p*(b+1) MOD (N)) + (p*(b+1) DIV (N))).

Values of p are respectively 0, 1, 2, ..., and (N-1). If the quantity m of channels used for frequency band stitching is an integer multiple of (b+1), N is equal to m; or if the quantity m of channels used for frequency band stitching is not an integer multiple of (b+1), N is a minimum integer multiple of (b+1) in positive integers greater than m. CH() represents a logical index of a channel. In this application, the logical index of the channel corresponds to a channel number of the channel, and the channel (or a frequency band) can be uniquely found by using the logical index of the channel. b represents a coefficient corresponding to a frequency band overlapping rate. When the frequency band overlapping rate indicated by the control message is 25%, a value of b is 0; when the frequency band overlapping rate indicated by the control message is 50%, a value of b is 1; or when the frequency band overlapping rate indicated by the control message is 75%, a value of b is 2. MOD represents a modulo operation, and DIV represents integer division.

In addition, the channel use sequence of the channels in the channel set used for frequency band stitching may further meet any one of the following conditions: For different values of p*(b+1) DIV (N), a transmission start time interval of signals on channels is greater than or equal to 1 millisecond; or a transmission start time interval of signals on two channels between which a frequency band overlapping rate exceeds 25% in the channel set used for frequency band stitching is greater than or equal to 1 millisecond.

In this application, before frequency band stitching, the channel use sequence between a transmit end and a receive end in a frequency band stitching process is aligned based on the control message and according to a predefined rule of the channel use sequence. This can shorten frequency band stitching time, and can also maintain good sensing performance and a large sensing range in some scenarios.

With reference to any one of the fifth aspect to the eighth aspect, in a possible implementation, the channel use sequence satisfies CH(((p*b) MOD (N)) + (p*b) DIV (N)).

Values of p are respectively 0, 1, 2, ..., and (N-1). If the quantity m of channels used for frequency band stitching is an integer multiple of b, N is equal to m; or if the quantity m of channels used for frequency band stitching is not an integer multiple of b, N is a minimum integer multiple of b in positive integers greater than m. CH() represents a logical index of a channel. In this application, the logical index of the channel corresponds to a channel number of the channel, and the channel (or a frequency band) can be uniquely found by using the logical index of the channel. b represents a coefficient corresponding to a frequency band overlapping rate. When the frequency band overlapping rate indicated by the control message is 25%, a value of b is 1; when the frequency band overlapping rate indicated by the control message is 50%, a value of b is 2; or when the frequency band overlapping rate indicated by the control message is 75%, a value of b is 3. MOD represents a modulo operation, and DIV represents integer division.

In addition, the channel use sequence of the channels in the channel set used for frequency band stitching may further meet any one of the following conditions: For different values of (p*OF) DIV (N), a transmission start time interval of signals on channels is greater than or equal to 1 millisecond; or transmission start time of signals on two channels between which a frequency band overlapping rate exceeds 25% in the channel set used for frequency band stitching is greater than or equal to 1 millisecond.

In this application, before frequency band stitching, the channel use sequence between the transmit end and the receive end in the frequency band stitching process is aligned based on the control message and according to the predefined rule of the channel use sequence. This can shorten frequency band stitching time, and can also maintain good sensing performance and a large sensing range in some scenarios.

With reference to any one of the fifth aspect to the eighth aspect, in a possible implementation, the channel use sequence meets one or more of the following: When the frequency band overlapping rate is 25%, the channels in the channel set are sequentially transmitted in ascending order or descending order of center frequencies; when the frequency band overlapping rate is 50%, a center frequency spacing between channels that are adjacent in transmission time in the channel set is greater than or equal to 499.2 MHz; or when the frequency band overlapping rate is 75%, a center frequency spacing between channels that are adjacent in transmission time in the channel set is greater than or equal to 374.4 MHz. When frequency band overlapping rates are of different values, for details of the channel use sequence of the channels in the channel set used for frequency band stitching, refer to the following descriptions of specific implementations. Details are not described herein.

In this application, the rule of the channel use sequence in frequency band stitching is set. This can shorten frequency band stitching time, and can also maintain good sensing performance and a large sensing range in some scenarios.

With reference to any one of the fifth aspect to the eighth aspect, in a possible implementation, the control message further indicates a manner of setting the channel use sequence of the channels in the channel set. When the manner of setting the channel use sequence is a first manner, the channel use sequence satisfies CH((p*(b+1) MOD (N)) + (p*(b+1) DIV (N))). When the manner of setting the channel use sequence is a second manner, the channel use sequence satisfies CH(((p*b) MOD (N)) + (p*b) DIV (N)).

In this application, configuring the manner of setting the channel use sequence in the control message can shorten frequency band stitching time, and can also improve flexibility of the channel use sequence.

With reference to any one of the fifth aspect to the eighth aspect, in a possible implementation, the control message further indicates one or more of the following: whether frequency band stitching is enabled, a frequency band stitching mode, or the coefficient b corresponding to the frequency band overlapping rate. The frequency band stitching mode includes frequency band stitching using an in-sequence channel order and frequency band stitching using an out-of-sequence channel order. The in-sequence channel order and the out-of-sequence channel order may be distinguished based on whether different channels in the channel set are in ascending order or descending order of center frequencies.

According to a ninth aspect, this application provides a communication apparatus. The communication apparatus includes a processor, configured to perform the method according to any one of the first aspect, the second aspect, the fifth aspect, the sixth aspect, or the possible implementations of the aspects. Alternatively, the processor is configured to execute a program stored in a memory. When the program is executed, the method according to any one of the first aspect, the second aspect, the fifth aspect, the sixth aspect, or the possible implementations of the aspects is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one component. In other words, the processor and the memory may alternatively be integrated together.

With reference to the ninth aspect, in a possible implementation, the communication apparatus further includes a transceiver, and the transceiver is configured to send or receive a control message.

According to a tenth aspect, an embodiment of this application provides a communication apparatus. The communication apparatus may be implemented in a form of a chip, or may be implemented in a form of a device. This is not limited in this application. The communication apparatus includes a logic circuit and an interface, and the logic circuit is coupled to the interface. The interface is configured to input and/or output information, and the logic circuit is configured to perform the method according to any one of the first aspect, the second aspect, the fifth aspect, the sixth aspect, or the possible implementations of the aspects.

According to an eleventh aspect, this application provides a readable storage medium. The readable storage medium stores program instructions, and when the program instructions are run on a computer, the computer is enabled to perform the method according to any one of the first aspect, the second aspect, the fifth aspect, the sixth aspect, or the possible implementations of the aspects.

According to a twelfth aspect, this application provides a program product including program instructions. When the program product runs, the method according to any one of the first aspect, the second aspect, the fifth aspect, the sixth aspect, or the possible implementations of the aspects is performed.

According to a thirteenth aspect, this application provides a communication system. The communication system includes a first communication apparatus and a second communication apparatus. The first communication apparatus is configured to perform the method according to any one of the first aspect, the fifth aspect, or the possible implementations of the aspects, and the second communication apparatus is configured to perform the method according to any one of the second aspect, the sixth aspect, or the possible implementations of the aspects.

For the technical effect achieved in the foregoing aspects, refer to each other or refer to beneficial effect in method embodiments described below. Details are not repeated herein.

## BRIEF DESCRIPTION OF DRAWINGS

FIG. 1 is a diagram of a structure of a wireless communication system according to an embodiment of this application;

FIG. 2 is a diagram of another structure of a wireless communication system according to an embodiment of this application;

FIG. 3a is a diagram of a possible scheduling manner of frequency band stitching according to an embodiment of this application;

FIG. 3b is a diagram of another possible scheduling manner of frequency band stitching according to an embodiment of this application;

FIG. 3c is a diagram of still another possible scheduling manner of frequency band stitching according to an embodiment of this application;

FIG. 4 is a diagram of an out-of-sequence channel order according to an embodiment of this application;

FIG. 5 is a diagram of an in-sequence channel order according to an embodiment of this application;

FIG. 6 is a schematic flowchart of an information exchange method in a UWB system according to an embodiment of this application;

FIG. 7a is a diagram of PSDs of signals on adjacent channels and a sum of the PSDs obtained when a frequency band overlapping rate is 25% according to an embodiment of this application;

FIG. 7b is a diagram of PSDs of signals on adjacent channels and a sum of the PSDs obtained when a frequency band overlapping rate is 50% according to an embodiment of this application;

FIG. 7c is a diagram of PSDs of signals on adjacent channels and a sum of the PSDs obtained when a frequency band overlapping rate is 75% according to an embodiment of this application;

FIG. 7d is a diagram of PSDs of signals on adjacent channels and a sum of the PSDs obtained when a frequency band overlapping rate is 39% according to an embodiment of this application;

FIG. 8 is another schematic flowchart of an information exchange method in a UWB system according to an embodiment of this application;

FIG. 9a is a diagram of a channel use sequence obtained when a frequency band overlapping rate is 25% according to an embodiment of this application;

FIG. 9b is a diagram of a channel use sequence obtained when a frequency band overlapping rate is 25% according to the conventional technology;

FIG. 10a is a diagram of a channel use sequence obtained when a frequency band overlapping rate is 50% according to an embodiment of this application;

FIG. 10b is a diagram of a channel use sequence obtained when a frequency band overlapping rate is 50% according to the conventional technology;

FIG. 11a is a diagram of a channel use sequence obtained when a frequency band overlapping rate is 75% according to an embodiment of this application;

FIG. 11b is a diagram of a channel use sequence obtained when a frequency band overlapping rate is 75% according to the conventional technology;

FIG. 12 is a diagram of a structure of a communication apparatus according to an embodiment of this application;

FIG. 13 is a diagram of another structure of a communication apparatus according to an embodiment of this application; and

FIG. 14 is a diagram of still another structure of a communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit quantities and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item)" means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "One or more of the following items (pieces)" or a similar expression thereof means any combination of these items. For example, one or more of the following items (pieces): a, b, or c, may indicate a, b, c, "a and b", "a and c", "b and c", or "a and b and c".

In this application, the word "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In the description of this application, both "when" and "if" mean that an apparatus performs corresponding processing in an objective situation, are not intended to limit time, do not require the apparatus to necessarily have a determining action during implementation, and do not mean another limitation.

In this application, an element represented in a singular form is intended to represent "one or more", but does not represent "one and only one", unless otherwise specified.

In embodiments of this application, determining B based on A does not mean that B is determined only based on A, and B may alternatively be determined based on A and/or other information.

The technical solutions provided in this application are applicable to a wireless personal area network (wireless personal area network, WPAN) based on a UWB technology. For example, a method provided in this application is applicable to IEEE 802.15 series protocols, for example, an 802.15.4a protocol, an 802.15.4z protocol, or an 802.15.4ab protocol, or a future generation UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, an LTE system, a 5th generation (5th-generation, 5G) communication system, a 6th generation (6th-generation, 6G) communication system, or the like.

The UWB technology is a new wireless communication technology. The UWB technology uses nanosecond-level non-sinusoidal wave narrow pulses to transmit data, and modulation is performed on impulses with very steep rise and fall time. Therefore, the UWB technology has a wide spectrum range for transmission, so that a signal has a bandwidth of a gigahertz (GHz) magnitude. A bandwidth used by UWB is usually higher than 500 MHz. A UWB system does not need to generate a sinusoidal carrier signal and may directly transmit an impulse sequence. Therefore, the UWB system has a wide spectrum and low average power. A UWB wireless communication system has advantages of a strong multi-path resolution capability, low power consumption, high confidentiality, and the like. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra wideband and narrowband communication. Therefore, both the UWB system and a narrowband (narrowband, NB) communication system can operate without interfering with each other. The method provided in this application may be implemented by a communication apparatus in a wireless communication system. In a communication apparatus, an apparatus or a chip for implementing functions of the UWB system may be referred to as a UWB module, and an apparatus or a chip for implementing functions of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes a UWB module, and may further include a narrowband communication module.

Embodiments of this application are mainly described by using a WPAN, for example, a network used in IEEE 802.15 series standards, as an example. However, a person skilled in the art easily understands that aspects in this application may be extended to other networks using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, 802.15.4ab currently under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not enumerated herein. For still another example, the communication apparatus may include a central control point, for example, a personal area network (personal area network, PAN) or a PAN coordinator. The PAN coordinator or the PAN may be a mobile phone, a vehicle-mounted device, an anchor (anchor), a tag (tag), a smart home, or the like. For yet another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It may be understood that the foregoing descriptions of the communication apparatus are applicable to any communication apparatus in embodiments of this application.

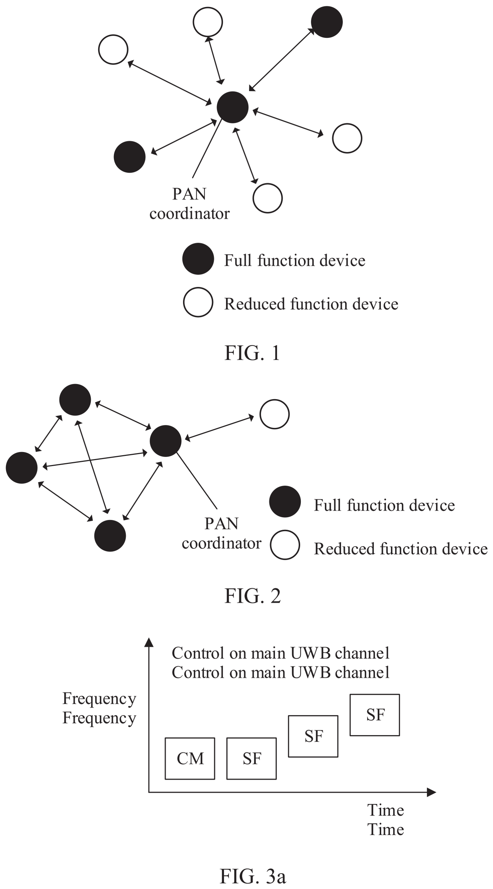

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device and the reduced function device are relative. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and each of the other three full function devices shown in FIG. 2 may also be used as a PAN coordinator. Examples are not enumerated herein. It may be further understood that the full function device and the reduced function device in this application are merely examples of the communication apparatus, and any apparatus that can implement a PPDU transmission method based on frequency band stitching provided in this application falls within the protection scope of this application.

Currently, limited by performance of an ADC, most UWB devices are incapable of processing a high-bandwidth signal. Sensing performance is directly proportional to an effective bandwidth. That is, a wider effective bandwidth indicates higher sensing precision. Therefore, to improve sensing performance of the UWB device, a possible solution is implemented through frequency band stitching. Frequency band stitching may be briefly described as follows: A transmit end transmits a plurality of sensing fragments (sensing fragments) by using a plurality of different frequency bands, where different sensing fragments may be transmitted on different frequency bands. A receive end separately receives the sensing fragments (SFs) on these frequency bands, and performs sensing measurement based on the received plurality of sensing fragments (SFs). This is equivalent to stitching the plurality of frequency bands, and performing sensing measurement on a frequency band obtained through stitching. The following describes several possible scheduling manners of frequency band stitching.

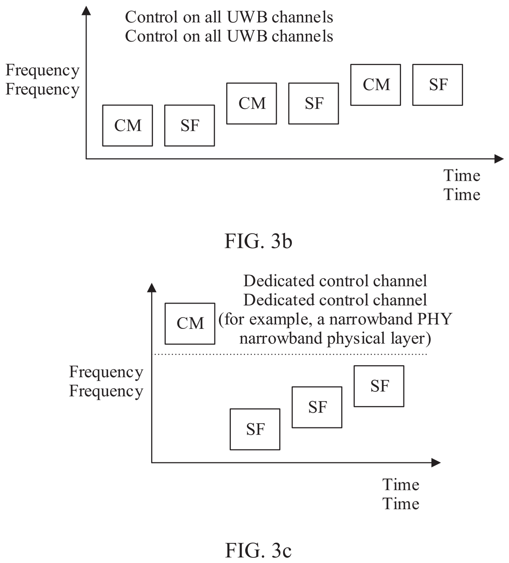

FIG. 3a is a diagram of a possible scheduling manner of frequency band stitching according to an embodiment of this application. In FIG. 3a, a horizontal coordinate represents a frequency (frequency), and a vertical coordinate represents time (time). As shown in FIG. 3a, one control message (control message, CM) may be used to schedule a plurality of sensing fragments (sensing fragment, SF), and a frequency band (or a channel) for transmitting the control message is the same as a frequency band (or a channel) for transmitting a sensing fragment (SF). For example, a frequency band for transmitting a sensing fragment (SF) is a UWB frequency band. FIG. 3b is a diagram of another possible scheduling manner of frequency band stitching according to an embodiment of this application. In FIG. 3b, a horizontal coordinate represents a frequency (frequency), and a vertical coordinate represents time (time). As shown in FIG. 3b, one control message (CM) may be used to schedule one sensing fragment (SF), and the control message and the sensing fragment (SF) are transmitted by using a same frequency band (or a same channel). For example, a frequency band for transmitting a sensing fragment (SF) is a UWB frequency band. FIG. 3c is a diagram of still another possible scheduling manner of frequency band stitching according to an embodiment of this application. In FIG. 3c, a horizontal coordinate represents a frequency (frequency), and a vertical coordinate represents time (time). As shown in FIG. 3c, a control message is transmitted on a dedicated control channel (dedicated control channel), for example, on a narrowband.

The control message may schedule a plurality of sensing fragments (SFs). The sensing fragments (SFs) may be transmitted on a UWB frequency band (or a UWB channel).

In the foregoing three scheduling manners (FIG. 3a to FIG. 3c), frequency bands (or channels) for transmitting sensing fragments (SFs) overlap. The overlapping frequency bands help track a phase during stitching, and improve accuracy of a channel impulse response (channel impulse response, CIR) on an effective channel after stitching. Currently, there are three types of overlapping rates between frequency bands for transmitting sensing fragments (SFs). The first type is 25% of the frequency band, the second type is 50% of the frequency band, and the third type is 75% of the frequency band. In this application, the "overlapping rate between frequency bands" may be referred to as a "frequency band overlapping rate" for short.

In this application, the symbol "%" represents a percent sign. Details are not described below again.

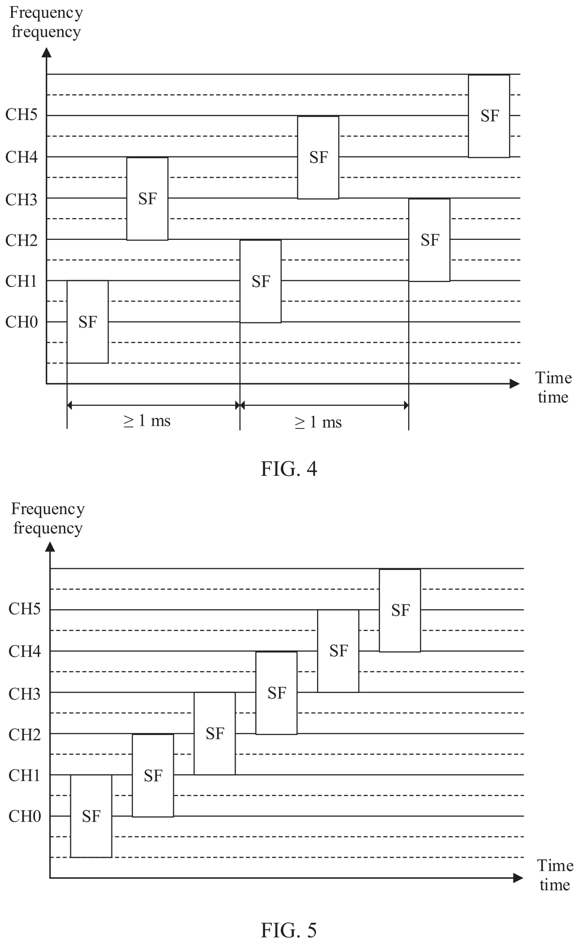

Currently, a channel use sequence in frequency band stitching may be classified into two types. One type is using channels out of sequence (which is referred to as an out-of-sequence channel order for short). The other type is using channels in sequence (which is referred to as an in-sequence channel order for short). FIG. 4 is a diagram of an out-of-sequence channel order according to an embodiment of this application. As shown in FIG. 4, an existing out-of-sequence channel order is characterized by that adjacent transmission channels (for example, CH0 and CH3 in FIG. 4) do not overlap in frequency domain, and a signal start transmission interval between channels (for example, CH0 and CH1 in FIG. 4) that overlap in frequency domain needs to be greater than 1 ms (millisecond). According to transmission power requirements of UWB transmission, maximum average power per millisecond per megahertz of bandwidth is -41.3 dBm. If a transmission interval between channels that overlap in frequency domain is greater than 1 ms, each sensing fragment (SF) may be transmitted at allowed maximum average power.

A channel use sequence of the out-of-sequence channel order meets the following conditions:

(1) An overlapping factor (overlapping factor, OF) when a frequency band overlapping rate is 25% is defined as 1, an overlapping factor (OF) when the frequency band overlapping rate is 50% is defined as 2, and an overlapping factor (OF) when the frequency band overlapping rate is 75% is defined as 3.

(2) It is assumed that m channels participate in frequency band stitching, and logical indexes are set for the m channels, and are denoted as CH(0), CH(1), ..., and CH(m-1).

(3) The channel use sequence is set according to the following formula (1-1):

$$CH((p*(OF+1) \text{ MOD } (N)) + (p*(OF+1) \text{ DIV } (N))) \dots\dots\dots\dots\dots\dots\dots\dots\dots\dots\dots\dots\dots (1\text{-}1)$$

p = 0, 1, 2, ..., and (N-1), MOD represents a modulo operation, and DIV represents integer division. Details are not described below. For integer division (DIV), x DIV y is equal to an integer part of a quotient of x and y. For example, if x is equal to 4 and y is equal to 6, x DIV y = 0. For another example, if x is equal to 8 and y is equal to 6, x DIV y = 1.

If a value of m cannot exactly divide (OF+1), N is a minimum value that is in positive integers greater than m and that can exactly divide (OF+1). If a value of m can exactly divide (OF+1), N is equal to m. For example, m is equal to 6. It is assumed that OF is equal to 2 (that is, the frequency band overlapping rate is 50%), because m can exactly divide (OF+1) (that is, equal to 3), N is equal to m equal to 6. It is assumed that OF is equal to 3 (that is, the frequency band overlapping rate is 75%), because m cannot exactly divide (OF+1) (that is, equal to 4), N is equal to 8. It may be understood that, if N is greater than m (that is, a value of m cannot exactly divide (OF+1)), additional channels (that is, channels whose logical indexes are CH(m), CH(m+1), ..., and CH(N-1)) are not actually used, and a transmit end does not transmit a UWB pulse on the additional channels.

(4) Transmission starts when t = 0, and the first wrap occurs after t ≥ 1 millisecond (Start transmitting at t = 0, The first wrap occurs after t ≥ 1 millisecond). FIG. 4 shows the channel use sequence when m is equal to 6 and OF is equal to 2 (that is, the frequency band overlapping rate is 50%), that is, CH(0), CH(3), CH(1), CH(4), CH(2), CH(5). In this application, the wrap (wrap) may be understood as that the logical indexes of the channels are in descending order. As shown in FIG. 4, the first wrap (wrap) may refer to CH(3) to CH(1), and the second wrap (wrap) may refer to CH(4) to CH(2). Therefore, based on a transmission time sequence, in FIG. 4, a transmission start time interval between a first sensing fragment (SF) and a third sensing fragment (SF) is greater than or equal to 1 millisecond, and a transmission start time interval between the third sensing fragment (SF) and a fifth sensing fragment (SF) is greater than or equal to 1 millisecond.

FIG. 5 is a diagram of an in-sequence channel order according to an embodiment of this application. As shown in FIG. 5, the in-sequence channel order is characterized by that different channels are sequentially transmitted in ascending order or descending order of center frequencies. FIG. 5 shows an in-sequence channel order when a frequency band overlapping rate is 50%. It may be understood that, because there is no limitation that a signal start transmission interval between channels that overlap in frequency domain needs to be greater than 1 ms in the in-sequence channel order, total transmission time in the in-sequence channel order may be less than 1 ms. Certainly, the total transmission time in the in-sequence channel order may alternatively be greater than 1 ms or equal to 1 ms. This is not limited in this embodiment of this application.

Unless otherwise specified, the "channel" mentioned in this application is a UWB channel, and a bandwidth of one UWB channel is 499.2 MHz.

An existing frequency band stitching solution does not combine advantages of an in-sequence channel order and an out-of-sequence channel order.

Embodiments of this application provide an information exchange method and an apparatus in a UWB system. Sending time and transmit power backoff in a frequency band stitching process are comprehensively considered, and a channel use sequence (a type of the channel use sequence) is associated with a frequency band overlapping rate between adjacent channels, to implement a better compromise between the sending time and transmit power in frequency band stitching. Further, in embodiments of this application, frequency band stitching time can be further shortened, and flexibility of the channel use sequence can be improved.

In this application, "transmit power backoff" may be understood as that a signal transmitted on a single channel cannot be sent at maximum transmit power limited by a regulation, that is, transmit power of the signal transmitted on the single channel is less than the maximum transmit power limited by the regulation.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application. It may be understood that a sequence of the following embodiments does not represent a degree of importance.

The communication apparatus in this application may support not only 802.15 series protocols, such as an 802.15.4ab standard or a next-generation standard of an 802.15.4ab standard, but also other standard protocols (for example, 802.11 series protocols), for example, a plurality of wireless local area network (wireless local area networks, WLAN) standards of an 802.11 family, such as 802.11ax, 802.11ac, 802.11n, 802.11g, 802.11b, 802.11a, 802.11be, a next generation thereof.

In a possible implementation, the method provided in this application may be applied to a sensing scenario of one node and another node, or may be applied to a sensing scenario of one node and a plurality of nodes, or may be applied to a sensing scenario of a plurality of nodes and a plurality of nodes. This is not limited in this application.

Embodiment 1

Embodiment 1 of this application mainly describes rules for using an in-sequence channel order (in-sequence channel order) and an out-of-sequence channel order (out-of-sequence channel order), that is, a case in which the in-sequence channel order is used and a case in which the out-of-sequence channel order is used.

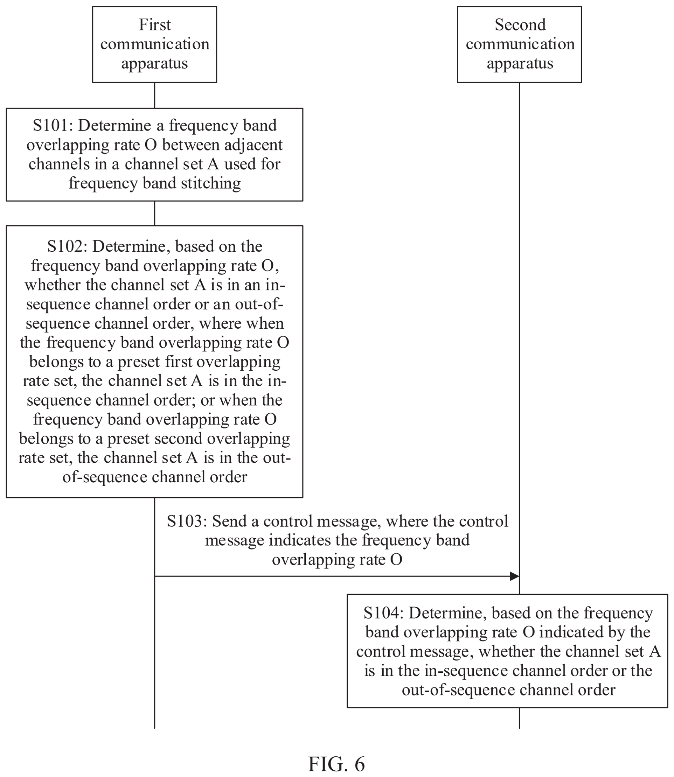

FIG. 6 is a schematic flowchart of an information exchange method in a UWB system according to an embodiment of this application. A first communication apparatus and a second communication apparatus in the method may be any two devices that can perform data communication in FIG. 1 or FIG. 2.

As shown in FIG. 6, the information exchange method in the UWB system includes but is not limited to the following steps:

S101: The first communication apparatus determines a frequency band overlapping rate O between adjacent channels in a channel set A used for frequency band stitching.

In a possible implementation, before frequency band stitching, the first communication apparatus (a transmit end) needs to determine the frequency band overlapping rate O between the adjacent channels in the channel set (channel set) A used for frequency band stitching. The channel set A used for frequency band stitching includes a plurality of channels, and the plurality of channels are distributed with an equal center frequency spacing (for example, the equal center frequency spacing is 124.8 MHz, 249.6 MHz, or 374.4 MHz). For example, a bandwidth of each channel in the channel set A is 499.2 MHz. In embodiments of this application, "a plurality of" indicates two or more, for example, two, three, or four.

For example, it is assumed that the channel set A is represented by using logical indexes of channels. FIG. 5 is used as an example. The channel set A includes six channels, logical indexes of the six channels are respectively CH0, CH1, CH2, CH3, CH4 and CH5, a bandwidth of each channel is 499.2 MHz, and the six channels are distributed with an equal center frequency spacing of 249.6 MHz. The adjacent channels in the channel set A may be understood as two channels between which a center frequency spacing is 249.6 MHz, that is, channels with adjacent logical indexes in FIG. 5. For example, CH0 and CH1 are adjacent channels, CH1 and CH2 are adjacent channels, and the rest may be deduced by analogy.

In a possible implementation, the frequency band overlapping rate O between the adjacent channels in the channel set A may be any one of the following: 25%, 50%, and 75%. During specific implementation, the frequency band overlapping rate O between the adjacent channels in the channel set A is selected or configured by the first communication apparatus (the transmit end). Certainly, the frequency band overlapping rate between the adjacent channels in the channel set used for frequency band stitching may alternatively be another value, for example, 20%, 40%, 60%, or 80%. This is not limited in embodiments of this application. It may be understood that the frequency band overlapping rate is equivalent to a center frequency spacing in a case of equal center frequency spacing distribution. In other words, if a bandwidth of a UWB channel is known to be 499.2 MHz, and any parameter of the frequency band overlapping rate and the equal center frequency spacing is known, the other parameter may be obtained through conversion. For example, the bandwidth of the UWB channel is known to be 499.2 MHz. When the frequency band overlapping rate is 25%, the center frequency spacing between adjacent channels is 374.4 MHz (that is, 499.2 × (1 - 25%)). When the frequency band overlapping rate is 50%, the center frequency spacing between adjacent channels is 249.6 MHz (that is, 499.2 × (1 - 50%)). When the frequency band overlapping rate is 75%, the center frequency spacing between adjacent channels is 124.8 MHz (that is, 499.2 × (1 - 75%)).

S102: The first communication apparatus determines, based on the frequency band overlapping rate O, whether the channel set A is in an in-sequence channel order or an out-of-sequence channel order, where when the frequency band overlapping rate O belongs to a preset first overlapping rate set, the channel set A is in the in-sequence channel order; or when the frequency band overlapping rate O belongs to a preset second overlapping rate set, the channel set A is in the out-of-sequence channel order. The in-sequence channel order and the out-of-sequence channel order are distinguished based on whether different channels in the channel set A are in ascending order or descending order of center frequencies.

In a possible implementation, the first overlapping rate set (denoted as $S_1$) includes one or more frequency band overlapping rates, the second overlapping rate set (denoted as $S_2$) includes one or more frequency band overlapping rates, and a union set of the first overlapping rate set $S_1$ and the second overlapping rate set $S_2$ is a candidate overlapping rate set (denoted as S), that is, $S_1 \cup S_2 = S$. In other words, the candidate overlapping rate set S includes a plurality of frequency band overlapping rates, which are represented as $O_1, O_2, ..., O_M$, that is, $S = \{O_1, O_2, ..., O_M\}$. For example, the candidate overlapping rate set S may include the following plurality of frequency band overlapping rates: 25%, 50%, 75%, 20%, 40%, 60%, or 80%. In a possible implementation, the first overlapping rate set $S_1$ includes a frequency band overlapping rate that is in the candidate overlapping rate set S and that is less than or equal to an overlapping rate threshold $O_{th}$, and the second overlapping rate set $S_2$ includes a frequency band overlapping rate that is in the candidate overlapping rate set S and that is greater than the overlapping rate threshold $O_{th}$. It may be understood that a frequency band overlapping rate that is in the candidate overlapping rate set S and that is equal to the overlapping rate threshold $O_{th}$ may belong to the first overlapping rate set $S_1$, or may belong to the second overlapping rate set $S_2$. This is not limited in this embodiment of this application. The overlapping rate threshold $O_{th}$ may be predefined or preconfigured. For example, the overlapping rate threshold $O_{th}$ is 39%, 25%, or 50%. A specific value of the overlapping rate threshold $O_{th}$ is not limited in this embodiment of this application.

For example, the first overlapping rate set $S_1$ includes a frequency band overlapping rate of 25%, and the second overlapping rate set $S_2$ includes a frequency band overlapping rate of 50% and a frequency band overlapping rate of 75%. Alternatively, the first overlapping rate set $S_1$ includes a frequency band overlapping rate of 25% and a frequency band overlapping rate of 50%, and the second overlapping rate set $S_2$ includes a frequency band overlapping rate of 75%. Alternatively, the first overlapping rate set Si includes a frequency band overlapping rate of 20% and a frequency band overlapping rate of 40%, and the second overlapping rate set $S_2$ includes a frequency band overlapping rate of 60% and a frequency band overlapping rate of 80%. In this embodiment of this application, frequency band overlapping rates included in the first overlapping rate set $S_1$ and the second overlapping rate set $S_2$ may be set based on an actual situation, and are not enumerated in this embodiment of this application. This is merely an example for description, and does not constitute a limitation on the protection scope of this application.

In a possible implementation, the overlapping rate threshold $O_{th}$ may be determined based on a frequency band overlapping rate obtained when an intersection point of power spectral densities (power spectrum density, PSD) of signals transmitted on two adjacent channels is equal to -3 dBr. For example, the overlapping rate threshold $O_{th}$ may be a frequency band overlapping rate obtained when an intersection point of PSDs of signals transmitted on two adjacent channels is equal to -3 dBr, or may be a value near the frequency band overlapping rate, or may be a value that is in the candidate overlapping rate set S and that is closest to the frequency band overlapping rate, or the like. This is not limited in embodiments of this application.

In embodiments of this application, "dBr" represents decibels relative to a reference level (decibels relative to reference level, dBr), and the reference level herein means that a maximum value of a power spectral density of a signal on a channel is 0 dBr. A same expression in the following indicates a same meaning. Details are not described again.

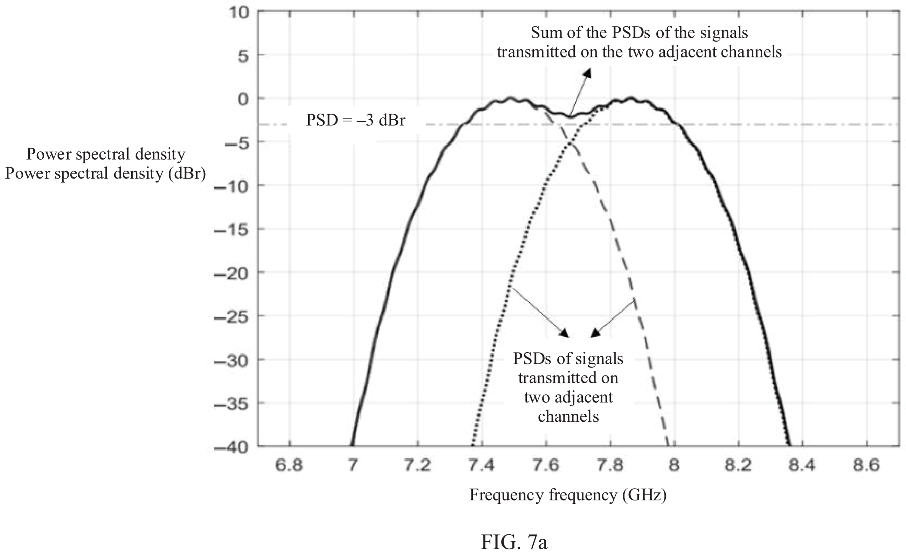

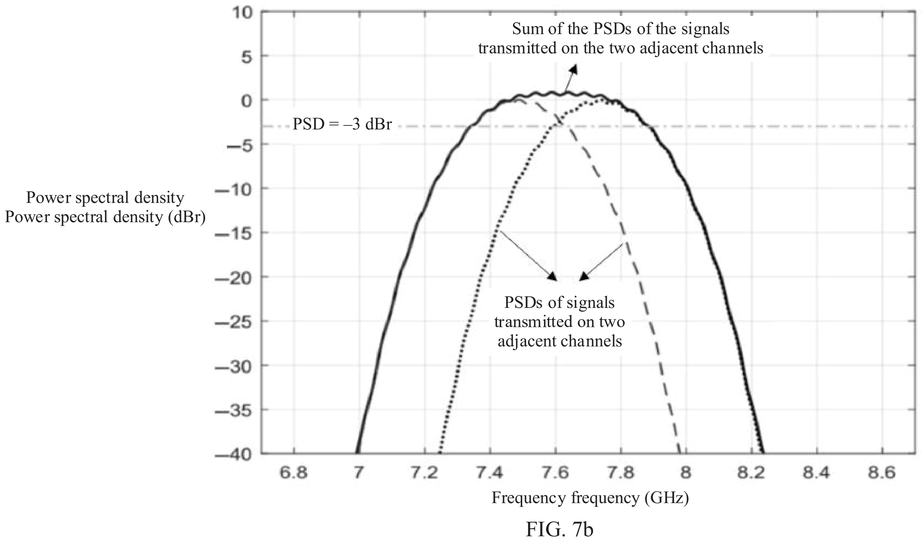

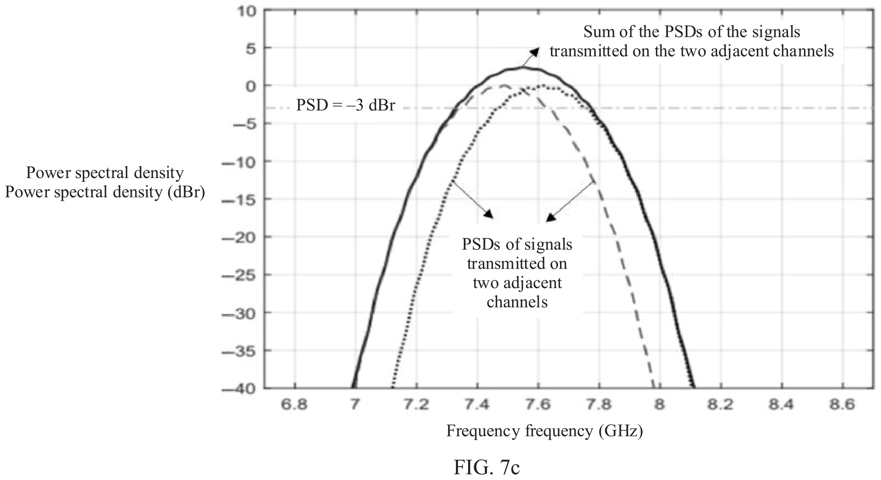

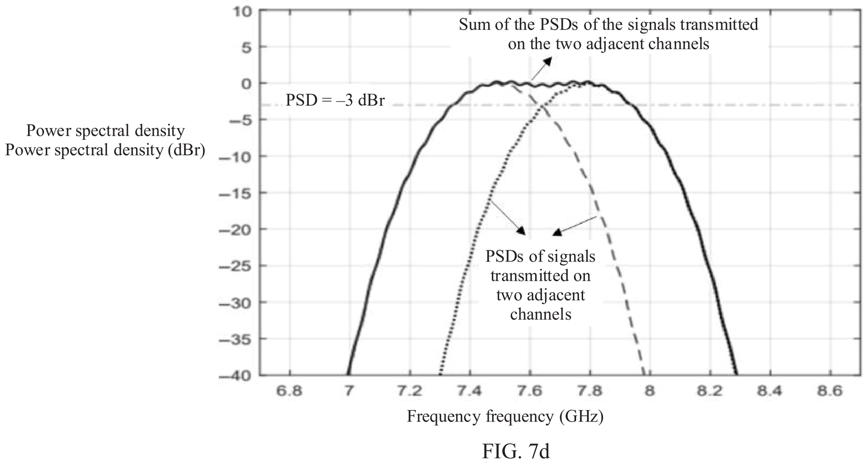

For example, a Kaiser waveform that occupies three pieces of chip time is used as an example to show selection of the overlapping rate threshold $O_{th}$. FIG. 7a to FIG. 7d are diagrams of PSDs of signals on adjacent channels and a sum of the PSDs obtained when frequency band overlapping rates are 25%, 50%, 75%, and 39% according to embodiments of this application. In FIG. 7a to FIG. 7d, a Kaiser waveform that occupies three pieces of chip time is used as an example of a waveform of the signal transmitted on the adjacent channels, and a coefficient of the Kaiser waveform is 10. A horizontal coordinate represents a frequency (frequency) in a unit of GHz, and a vertical coordinate represents a power spectral density (PSD) in a unit of dBr. It can be learned from FIG. 7a that, when the frequency band overlapping rate is 25%, an intersection point (approximately equal to -5 dBr) of PSDs of signals transmitted on adjacent channels is less than -3 dBr. It can be learned from FIG. 7b and FIG. 7c that, when the frequency band overlapping rates are 50% and 75%, an intersection point of PSDs of signals transmitted on adjacent channels is greater than -3 dBr. It can be learned from FIG. 7d that, when the frequency band overlapping rate is 39%, an intersection point of PSDs of signals transmitted on adjacent channels is equal to -3 dBr.

Therefore, the overlapping rate threshold $O_{th}$ may be set to 39%. Certainly, the overlapping rate threshold $O_{th}$ may alternatively be set to a value near 39%, for example, 30%, 35%, 38%, 40%, or 45%. Alternatively, the overlapping rate threshold $O_{th}$ may be set to a value that is in the candidate overlapping rate set S and that is closest to 39%, for example, 50%.

It may be understood that, when different waveforms are used to simulate PSDs of signals transmitted on adjacent channels, the overlapping rate threshold $O_{th}$ may be slightly different. However, it can be learned from a simulation result of the existing waveforms that: Division results of the first overlapping rate set Si and the second overlapping rate set $S_2$ remain unchanged. In other words, for any existing waveform, the first overlapping rate set $S_1$ divided based on the overlapping rate threshold $O_{th}$ includes the frequency band overlapping rate of 25%, and the second overlapping rate set $S_2$ includes the frequency band overlapping rate of 50% and the frequency band overlapping rate of 75%. Certainly, the first overlapping rate set $S_1$ and the second overlapping rate set $S_2$ may alternatively change with a change of the overlapping rate threshold $O_{th}$. In other words, for different values of the overlapping rate threshold $O_{th}$, the first overlapping rate set $S_1$ may vary, and the second overlapping rate set $S_2$ may also be different.

In another possible implementation, the overlapping rate threshold $O_{th}$ may be determined based on a minimum frequency band overlapping rate obtained when a sum of power spectral densities of signals transmitted on two adjacent channels exceeds 0 dBr. For example, the overlapping rate threshold $O_{th}$ may be a minimum frequency band overlapping rate obtained when the sum of power spectral densities of signals transmitted on two adjacent channels exceeds 0 dBr, or may be a value near the minimum frequency band overlapping rate, or may be a value that is in the candidate overlapping rate set S and that is closest to the minimum frequency band overlapping rate. Another example is not described. This is not limited in embodiments of this application.

It may be understood that the implementation of the overlapping rate threshold $O_{th}$ is merely an example. In an actual implementation, the overlapping rate threshold $O_{th}$ may alternatively have other implementations, which are not enumerated in this embodiment of this application.

In a possible implementation, if the frequency band overlapping rate O determined by the first communication apparatus in step S101 belongs to the preset first overlapping rate set S1, the first communication apparatus may determine that the channel set A is in the in-sequence channel order. If the frequency band overlapping rate O determined by the first communication apparatus in step S 101 belongs to the preset second overlapping rate set $S_2$, the first communication apparatus may determine that the channel set A is in the out-of-sequence channel order. Alternatively, if the frequency band overlapping rate O belongs to the preset second overlapping rate set $S_2$, the channel set A may be in the in-sequence channel order. In other words, if the frequency band overlapping rate O is less than or equal to the overlapping rate threshold $O_{th}$, the in-sequence channel order is used; or if the frequency band overlapping rate O is greater than the overlapping rate threshold $O_{th}$, the out-of-sequence channel order or the in-sequence channel order is used. It may be understood that when the frequency band overlapping rate O is equal to the overlapping rate threshold $O_{th}$, both the in-sequence channel order and the out-of-sequence channel order may be used. This is not limited in embodiments of this application.

In embodiments of this application, the in-sequence channel order and the out-of-sequence channel order may be distinguished based on whether different channels in the channel set A are in ascending order or descending order of center frequencies. The in-sequence channel order meets that different channels are in ascending order or descending order of center frequencies, and the out-of-sequence channel order does not meet that different channels are in ascending order or descending order of center frequencies. Specifically, a meaning of the in-sequence channel order may be the same as that in the conventional technology, as shown in FIG. 5. The in-sequence channel order in this embodiment of this application may meet that different channels in the channel set A are sequentially transmitted in ascending order or descending order of center frequencies. In this embodiment of this application, a meaning of the out-of-sequence channel order may be the same as or different from that in the conventional technology. For example, the out-of-sequence channel order in this embodiment of this application may meet that a frequency band overlapping rate between channels that are adjacent in transmission time is less than or equal to a first preset threshold, and a transmission time interval of signals on channels between which a frequency band overlapping rate is greater than or equal to a second preset threshold is greater than or equal to 1 millisecond. The first preset threshold and the second preset threshold may be the same, or may be different. It may be understood that, when both the first preset threshold and the second preset threshold are 0, the out-of-sequence channel order in this embodiment of this application meets that there is no overlapping between channels that are adjacent in transmission time, and a transmission time interval of signals on channels that overlap in frequency domain is greater than or equal to 1 millisecond, as shown in FIG. 4. When neither the first preset threshold nor the second preset threshold is 0, for example, when both the first preset threshold and the second preset threshold are 25%, the out-of-sequence channel order in this embodiment of this application meets that a frequency band overlapping rate between channels that are adjacent in transmission time is less than or equal to 25%, and a transmission time interval of signals on channels between which a frequency band overlapping rate is greater than 25% is greater than or equal to 1 millisecond. For a specific channel use sequence, refer to the following description in Embodiment 2. Details are not described herein. Alternatively, if the first preset threshold is 25%, and the second preset threshold is 50%, the out-of-sequence channel order in this embodiment of this application meets that a frequency band overlapping rate between channels that are adjacent in transmission time is less than or equal to 25%, and a transmission time interval of signals on channels between which a frequency band overlapping rate is greater than or equal to 50% is greater than or equal to 1 millisecond. For a specific channel use sequence, refer to the following description in Embodiment 2. Details are not described herein.

It may be understood that two factors need to be considered for frequency band stitching. One is sending time, and the other is transmit power. Total sending time required by sensing fragments (SFs) in each frequency band stitching is less than channel correlation time. The channel correlation time depends on an application scenario, and usually ranges from several nanoseconds to several milliseconds. Because the in-sequence channel order is not limited by a 1 ms transmission time interval, total sending time of sensing fragments (SFs) when the in-sequence channel order is used is less than total sending time of the sensing fragments (SFs) when the out-of-sequence channel order is used. Therefore, using the in-sequence channel order in frequency band stitching can meet correlation time requirements in more scenarios. Due to the limited transmission power of UWB, a maximum average power spectral density is -41.3 dBm/MHz/ms. In this case, when the in-sequence channel order is used in frequency band stitching, overlapping of adjacent channels in frequency domain causes accumulation of power spectral densities (PSDs). As a result, transmit power of sensing fragments (SFs) on the adjacent channels is reduced, and sensing performance and a sensing range are further reduced. In conclusion, using the in-sequence channel order can shorten frequency band stitching time, and meet the correlation time requirements in more scenarios; and using the out-of-sequence channel order can improve the sensing performance and increase the sensing range.

Therefore, the rules for using the in-sequence channel order and the out-of-sequence channel order need to consider both of the two factors (the sending time and the transmit power). In addition, to implement a better compromise between the sending time and the transmit power in frequency band stitching, in this embodiment of this application, the candidate overlapping rate set S is divided based on the overlapping rate threshold $O_{th}$, to obtain the first overlapping rate set $S_1$ and the second overlapping rate set $S_2$. When the frequency band overlapping rate O (for example, 25%) belongs to the first overlapping rate set $S_1$, the in-sequence channel order is used. A sum of PSDs of signals on adjacent channels does not exceed 0 dBr (as shown in FIG. 7a) when the frequency band overlapping rate O is 25%. Therefore, using the in-sequence channel order in this case implements that the sum of PSDs of transmit power meets the limitation of the maximum average power spectral density (-41.3 dBm/MHz/ms), and also can shorten frequency band stitching time, thereby meeting correlation time requirements in more scenarios. When the frequency band overlapping rate O (for example, 50% or 75%) belongs to the second overlapping rate set $S_2$, the out-of-sequence channel order is used. A sum of PSDs of signals on adjacent channels exceeds 0 dBr when the frequency band overlapping rate O is 50% or 75% (as shown in FIG. 7b and FIG. 7c above). If the in-sequence channel order is used, transmit power on the adjacent channel is reduced, and consequently sensing performance and a sensing range are reduced. Therefore, using the out-of-sequence channel order in this case can improve the sensing performance and increase the sensing range.

In short, in this embodiment of this application, the sending time and transmit power backoff in the frequency band stitching process are comprehensively considered, and the in-sequence channel order or the out-of-sequence channel order is selected based on the frequency band overlapping rate. This can implement a better compromise between the sending time and the transmit power in frequency band stitching. In other words, in this embodiment of this application, the frequency band overlapping rate can be flexibly selected based on an application scenario.

S103: The first communication apparatus sends a control message, where the control message indicates the frequency band overlapping rate O.

Correspondingly, the second communication apparatus receives the control message.

S104: The second communication apparatus determines, based on the frequency band overlapping rate O indicated by the control message, whether the channel set A is in the in-sequence channel order or the out-of-sequence channel order.

In a possible implementation, the first communication apparatus sends a control message (CM) to the second communication apparatus, where the control message may indicate a frequency band overlapping rate O between adjacent channels in the channel set A used for frequency band stitching. Correspondingly, the second communication apparatus (a receive end) receives the control message, and may determine, based on the frequency band overlapping rate O indicated by the control message, whether the channel set A is in an in-sequence channel order or an out-of-sequence channel order. When the frequency band overlapping rate O belongs to the preset first overlapping rate set $S_1$, the channel set A is in the in-sequence channel order. When the frequency band overlapping rate O belongs to the preset second overlapping rate set $S_2$, the channel set A is in the out-of-sequence channel order. Alternatively, when the frequency band overlapping rate O belongs to the preset second overlapping rate set $S_2$, the channel set A may be in the in-sequence channel order. For example, for an implementation of step S104, refer to the implementation of step S102. Details are not described herein again.

In this embodiment of this application, the sending time and transmit power backoff in the frequency band stitching process are comprehensively considered, and the channel use sequence is associated with the frequency band overlapping rate between the adjacent channels, to implement a better compromise between the sending time and the transmit power in the frequency band stitching process.

Embodiment 2

Embodiment 2 of this application mainly describes a specific rule of a channel use sequence in frequency band stitching.

In a possible implementation, Embodiment 2 of this application may be separately implemented, or may be implemented in combination with Embodiment 1. This is not limited. When Embodiment 2 of this application is implemented in combination with Embodiment 1, regardless of whether an out-of-sequence channel order or an in-sequence channel order is selected in Embodiment 1, for a channel use sequence, refer to related descriptions in Embodiment 2 of this application.

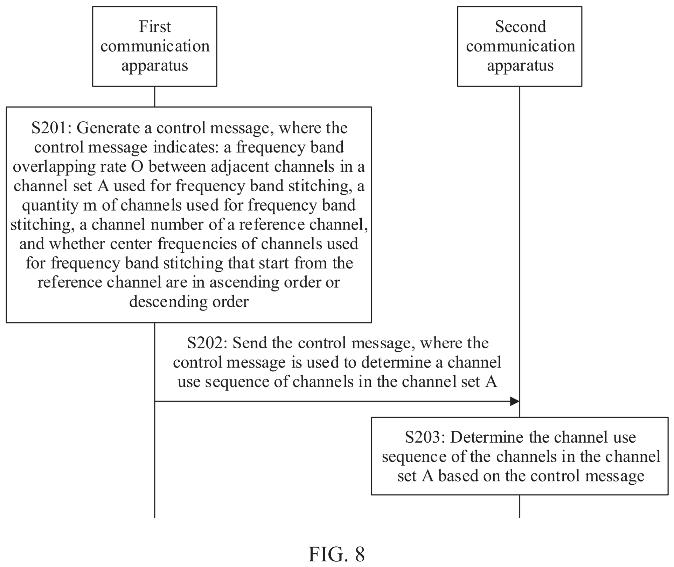

FIG. 8 is another schematic flowchart of an information exchange method in a UWB system according to an embodiment of this application. A first communication apparatus and a second communication apparatus in the method may be any two devices that can perform data communication in FIG. 1 or FIG. 2.

As shown in FIG. 8, the information exchange method in the UWB system includes but is not limited to the following steps:

S201: The first communication apparatus generates a control message, where the control message indicates: a frequency band overlapping rate O between adjacent channels in a channel set A used for frequency band stitching, a quantity m of channels used for frequency band stitching, a channel number of a reference channel, and whether center frequencies of channels used for frequency band stitching that start from the reference channel are in ascending order or descending order.

S202: The first communication apparatus sends the control message, where the control message is used to determine a channel use sequence of channels in the channel set A.

Correspondingly, the second communication apparatus receives the control message.

S203: The second communication apparatus determines the channel use sequence of the channels in the channel set A based on the control message.

In a possible implementation, before frequency band stitching, the first communication apparatus (a transmit end) and the second communication apparatus (a receive end) need to align a channel use sequence in a frequency band stitching process. For example, the first communication apparatus and the second communication apparatus align the channel use sequence based on a control message (CM). The following describes a plurality of manners of obtaining the channel use sequence in this embodiment of this application.

Implementation 1

Each frequency band overlapping rate has a specific coefficient b, and the transmit end and the receive end (for example, the first communication apparatus and the second communication apparatus) may obtain the channel use sequence in the frequency band stitching process based on the coefficient b and according to a specific formula. In Implementation 1, the control message (CM) may indicate: the frequency band overlapping rate O between the adjacent channels in the channel set A used for frequency band stitching, the quantity m of channels used for frequency band stitching, the channel number (Channel number) of the reference channel (or referred to as a base channel), or whether the center frequencies of channels used for frequency band stitching that start from the reference channel (or the base channel) are in ascending order or descending order. For example, the control message (CM) may include but is not limited to one or more pieces of content in the following Table 1.

Table 1

| Field (field) | Description (description) |
|---|---|
| Base channel number or channel number (base channel number or channel number) | Channel number of a reference channel (or referred to as a base channel) |
| Frequency stitching direction (frequency stitching direction) | Whether center frequencies starting from the reference channel (or the base channel) are in ascending order or descending order |
| Carrier frequency grid configuration ID (carrier frequency grid configuration identifier) | Frequency band overlapping rate O between adjacent channels |
| Aggregated Bandwidth (aggregated bandwidth) | Total quantity of frequency bands used for frequency band stitching (namely, a quantity m of channels used for frequency band stitching) |

In a possible implementation, the control message (CM) may further indicate one or more of the following: whether frequency band stitching is enabled, a frequency band stitching mode, the coefficient b corresponding to the frequency band overlapping rate, or a channel impulse response (channel impulse response, CIR) feedback format. For example, the control message (CM) may include but is not limited to one or more pieces of content in the following Table 2.

Table 2

| Field (field) | Description (description) |
|---|---|
| Frequency Stitching Control (frequency stitching control) | Whether to enable frequency band stitching and/or a frequency band stitching mode (for example, frequency band stitching using an in-sequence channel order or frequency band stitching using an out-of-sequence channel order) |
| Base channel number or channel number (base channel number or channel number) | Channel number of a reference channel (or referred to as a base channel) |
| Frequency stitching direction (frequency stitching direction) | Whether center frequencies starting from the reference channel (or the base channel) are in ascending order or descending order |
| Carrier frequency grid configuration ID (carrier frequency grid configuration identifier) | Frequency band overlapping rate O between adjacent channels |
| Aggregated Bandwidth (aggregated bandwidth) | Total quantity of frequency bands used for frequency band stitching (namely, a quantity m of channels used for frequency band stitching) |
| Overlapping Coefficient (overlapping coefficient) | Coefficient b |
| Feedback control (feedback control) | Channel impulse response (CIR) feedback format |

A length of the base channel number or channel number field may be 4 bits, indicating a channel number (Channel number) of a reference channel (or referred to as a base channel). The frequency stitching direction field may be 1 bit. For example, 0 indicates that center frequencies starting from a reference channel are in ascending order, and 1 indicates that center frequencies starting from the reference channel are in descending order. A length of the carrier frequency grid configuration identifier field may be 2 bits. For example, 00 indicates 25% overlapping, 01 indicates 50% overlapping, 10 indicates 75% overlapping, and 11 indicates no overlapping; or 00 indicates 20% overlapping, 01 indicates 40% overlapping, 10 indicates 60% overlapping, and 11 indicates 80% overlapping. A length of the aggregated bandwidth field may be 4 bits, indicating a quantity m of channels used for frequency band stitching. A length of the frequency stitching control field may be 1 bit, indicating whether to enable frequency band stitching. Alternatively, a length of the frequency stitching control field is 2 bits, indicating whether frequency band stitching is enabled and a frequency band stitching mode when frequency band stitching is enabled. For example, when the frequency stitching control field is 00, it indicates that frequency band stitching is not enabled; when the frequency stitching control field is 01, it indicates frequency band stitching using an in-sequence channel order; when the frequency stitching control field is 10, it indicates frequency band stitching using an out-of-sequence channel order; and when the frequency stitching control field is 11, it indicates reservation. A length of the overlapping coefficient field may be 3 bits. For example, 000 indicates that the coefficient b is 0, 001 indicates that the coefficient b is 1, 010 indicates that the coefficient b is 2, 011 indicates that the coefficient b is 3, 100 indicates that the coefficient b is 4, 101 indicates that the coefficient b is 5, and 110 and 111 indicate reservation. A length of the feedback control field may be 2 bits, and the feedback control field is used to control a CIR feedback format.

A length, a name, a specific indication manner, and the like of each field in the control message are not limited in this embodiment of this application. A length, a name, a specific indication manner, and the like of each field are all examples, and do not constitute a limitation on the protection scope of this application.

The transmit end and the receive end (that is, the first communication apparatus and the second communication apparatus) may obtain, based on content of the control message, the channel use sequence of the channels in the channel set A used for frequency band stitching. For ease of description, the channel use sequence in embodiments of this application may be represented by using logical indexes of channels.

In a possible implementation, the channel use sequence may meet the following conditions:

(1) b represents a coefficient corresponding to a frequency band overlapping rate. It is defined that a value of the coefficient b is 0 when the frequency band overlapping rate is 25%, a value of the coefficient b is 1 when the frequency band overlapping rate is 50%, and a value of the coefficient b is 2 when the frequency band overlapping rate is 75%.
(2) Logical indexes are set for the m channels used for frequency band stitching, and are denoted as CH(0), CH(1), ..., and CH(m-1).
(3) The channel use sequence is set according to the following formula (2-1):

$$CH((p*(b+1) \text{ MOD } (N)) + (p*(b+1) \text{ DIV } (N))) \ .......................................................(2-1)$$

p = 0, 1, 2, ..., and (N-1), MOD represents a modulo operation, and DIV represents integer division. If the quantity m of channels used for frequency band stitching is an integer multiple of (b+1), N is equal to m. If the quantity m of channels used for frequency band stitching is not an integer multiple of (b+1), N is a minimum value that is in positive integers greater than m and that can exactly divide (b+1). Additional channels (that is, channels whose logical indexes are CH(m), CH(m+1), ..., and CH(N-1)) are not actually used, and the transmit end does not transmit a UWB pulse on the additional channels.

Optionally, the channel use sequence may further meet any one of the following conditions:
For different values of p*(b+1) DIV (N), a transmission start time interval of signals on channels is greater than or equal to 1 millisecond. Alternatively, a transmission start time interval of signals on two channels between which a frequency band overlapping rate exceeds 25% is greater than or equal to 1 millisecond. Alternatively, transmission starts when t = 0, and the first wrap occurs after t $\geq$ 1 millisecond (Start transmitting at t = 0, The first wrap occurs after t $\geq$ 1 millisecond). A start time interval between each subsequent wrap and a previous wrap is greater than or equal to 1 millisecond. For a meaning of the wrap (wrap), refer to the foregoing descriptions. Details are not described herein again.

It may be understood that, for different frequency band overlapping rates, the channel use sequence may meet different conditions. For example, for different frequency band overlapping rates such as 50% and 75%, when the frequency band overlapping rate is 50%, the channel use sequence meets that for different values of p*(b+1) DIV (N), a transmission start time interval of signals on channels is greater than or equal to 1 millisecond. When the frequency band overlapping rate is 75%, the channel use sequence meets that transmission start time of signals on two channels between which a frequency band overlapping rate exceeds 25% is greater than or equal to 1 millisecond. Certainly, for different frequency band overlapping rates, the channel use sequence may meet the same condition. For example, for different frequency band overlapping rates such as 25%, 50%, and 75%, the channel use sequence meets that a transmission start time interval of signals on two channels between which a frequency band overlapping rate exceeds 25% is greater than or equal to 1 millisecond.

In another possible implementation, the channel use sequence meets the following conditions:

(1) b represents a coefficient corresponding to a frequency band overlapping rate. It is defined that a value of the coefficient b is 1 when the frequency band overlapping rate is 25%, a value of the coefficient b is 2 when the frequency band overlapping rate is 50%, and a value of the coefficient b is 3 when the frequency band overlapping rate is 75%. In an implementation, the coefficient b may be an overlapping factor OF, and b in the following formula (2-2) may alternatively be replaced with the overlapping factor OF.
(2) Logical indexes are set for the m channels used for frequency band stitching, and are denoted as CH(0), CH(1), ..., and CH(m-1).
(3) The channel use sequence is set according to the following formula (2-2):

$$CH(((p*b) \text{ MOD } (N)) + (p*b) \text{ DIV } (N)) \dots\dots\dots\dots\dots\dots\dots\dots\dots\dots\dots\dots\dots(2\text{-}2)$$

p = 0, 1, 2, ..., and (N-1), MOD represents a modulo operation, and DIV represents integer division. If the quantity m of channels used for frequency band stitching is an integer multiple of b, N is equal to m. If the quantity m of channels used for frequency band stitching is not an integer multiple of b, N is a minimum value that is in positive integers greater than m and that can exactly divide b. Additional channels (that is, channels whose logical indexes are CH(m), CH(m+1), ..., and CH(N-1)) are not actually used, and the transmit end does not transmit a UWB pulse on the additional channels.

Optionally, the channel use sequence may further meet any one of the following conditions:
For different values of (p*b) DIV (N), a transmission start time interval of signals on channels is greater than or equal to 1 millisecond. Alternatively, a transmission start time interval of signals on two channels between which a frequency band overlapping rate exceeds 25% is greater than or equal to 1 millisecond. Alternatively, transmission starts when t = 0, and the first wrap occurs after t ≥ 1 millisecond (Start transmitting at t = 0, The first wrap occurs after t ≥ 1 millisecond). A start time interval between each subsequent wrap and a previous wrap is greater than or equal to 1 millisecond. For a meaning of the wrap (wrap), refer to the foregoing descriptions. Details are not described herein again.

It may be understood that, for different frequency band overlapping rates, the channel use sequence may meet the same or different conditions. For details, refer to the foregoing descriptions. Details are not described herein again.

The following uses several examples to describe the channel use sequence when the frequency band overlapping rate is 25%, 50%, and 75%, respectively. In the following examples, the quantity m of channels used for frequency band stitching is equal to 8.

Example 1: A frequency band overlapping rate O between adjacent channels in the channel set A used for frequency band stitching is 25%.

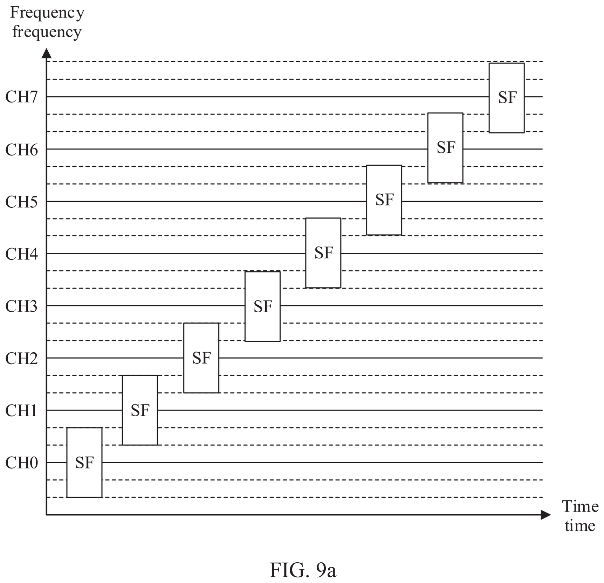

FIG. 9a is a diagram of a channel use sequence when a frequency band overlapping rate is 25% according to an embodiment of this application. As shown in FIG. 9a, m is equal to 8, and when the frequency band overlapping rate is 25%, the channel use sequence set according to the foregoing formula (2-1) and formula (2-2) is CH0, CH1, CH2, CH3, CH4, CH5, CH6, CH7. Therefore, it can be learned from FIG. 9a that, in this embodiment of this application, when the frequency band overlapping rate is 25%, the in-sequence channel order is used. In other words, when the frequency band overlapping rate O between the adjacent channels is 25%, the channels in the channel set A are sequentially transmitted in ascending order or descending order of center frequencies, that is, the channel use sequence meets that the center frequencies starting from the reference channel are in ascending order or descending order.

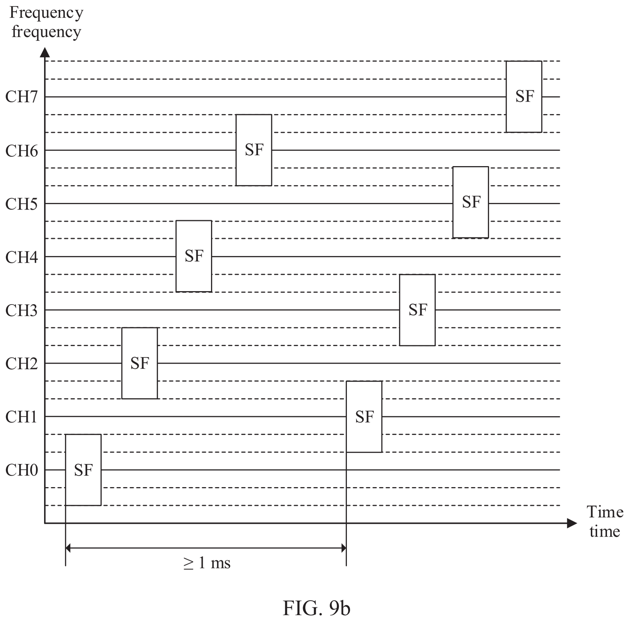

FIG. 9b is a diagram of a channel use sequence when a frequency band overlapping rate is 25% according to the conventional technology. The channel use sequence in FIG. 9b is set according to the foregoing formula (1-1). As shown in FIG. 9b, m is equal to 8, and when the frequency band overlapping rate is 25%, the channel use sequence set according to the foregoing formula (1-1) is CH0, CH2, CH4, CH6, CH1, CH3, CH5, CH7. Therefore, it can be learned from FIG. 9b that, when the frequency band overlapping rate is 25%, the out-of-sequence channel order is used in the conventional technology, transmission starts when t = 0, and the first wrap (wrap) occurs after t ≥ 1 millisecond. In other words, in the conventional technology, when the frequency band overlapping rate is 25%, frequency band stitching time is at least greater than 1 millisecond. For a meaning of the wrap (wrap), refer to the foregoing descriptions. Details are not described herein again.

However, in this embodiment of this application (as shown in FIG. 9a), the in-sequence channel order is used when the frequency band overlapping rate is 25%. Because total transmission time in the in-sequence channel order may be less than 1 millisecond, in this embodiment of this application, frequency band stitching time can be shortened, to meet correlation time requirements in more scenarios.

Example 2: A frequency band overlapping rate O between adjacent channels in the channel set A used for frequency band stitching is 50%.

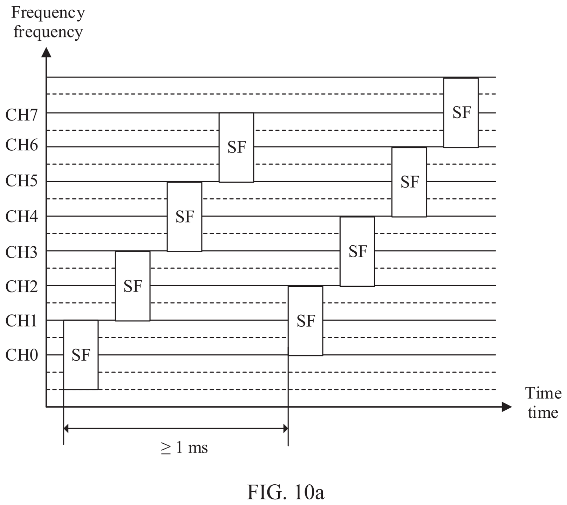

FIG. 10a is a diagram of a channel use sequence when a frequency band overlapping rate is 50% according to an embodiment of this application. As shown in FIG. 10a, m is equal to 8, and when the frequency band overlapping rate is 50%, the channel use sequence set according to the foregoing formula (2-1) and formula (2-2) is CH0, CH2, CH4, CH6, CH1, CH3, CH5, CH7. It can be learned from FIG. 10a that, when the frequency band overlapping rate is 50%, one wrap (wrap) occurs in the channel use sequence set according to the foregoing formula (2-1) and formula (2-2). The wrap occurs on CH1, transmission starts when t = 0, and the first wrap (wrap) occurs after t ≥ 1 millisecond. In other words, when the frequency band overlapping rate O between the adjacent channels is 50%, the channel use sequence meets: From t = 0 to a start of the first wrap (for example, from t = 0 to start time of a fifth SF transmission in FIG. 10a), a center frequency spacing between two channels adjacent in transmission time (for example, CH0 and CH2, CH2 and CH4, and CH4 and CH6 in FIG. 10a) is 499.2 MHz; from a start of each subsequent wrap to a start of a next wrap, a center frequency spacing between two channels adjacent in transmission time (for example, CH1 and CH3, CH3 and CH5, and CH5 and CH7 in FIG. 10a) is also 499.2 MHz; and transmission starts when t = 0, and the first wrap occurs after t ≥ 1 millisecond, or transmission start time of signals on two channels (for example, CH0 and CH1, and CH1 and CH2 in FIG. 10a) between which a frequency band overlapping rate exceeds 25% is greater than or equal to 1 millisecond.

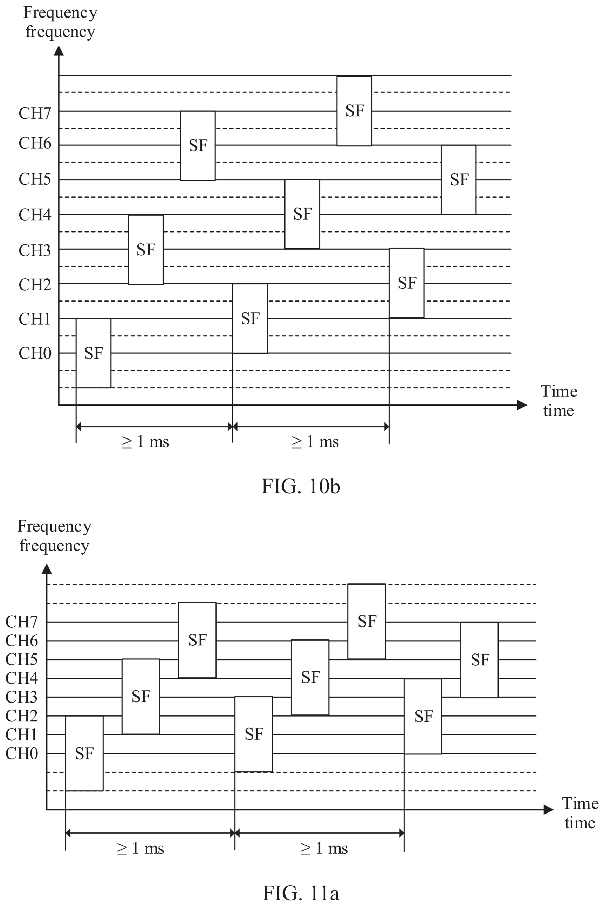

FIG. 10b is a diagram of a channel use sequence when a frequency band overlapping rate is 50% according to the conventional technology. The channel use sequence in FIG. 10b is set according to the foregoing formula (1-1). As shown in FIG. 10b, m is equal to 8, and when the frequency band overlapping rate is 50%, the channel use sequence set according to the foregoing formula (1-1) is CH0, CH3, CH6, CH1, CH4, CH7, CH2, CH5. It can be learned from FIG. 10b that, when the frequency band overlapping rate is 50%, two wraps (wraps) occur in the channel use sequence set according to the foregoing formula (1-1). The first wrap occurs on CH1, and the second wrap occurs on CH2. Transmission starts when t = 0, and the first wrap occurs after $t \geq 1$ millisecond. A start time interval between each subsequent wrap and a previous wrap is greater than or equal to 1 millisecond. Therefore, in the conventional technology, when the frequency band overlapping rate is 50%, frequency band stitching time is at least greater than 2 millisecond. For a meaning of the wrap (wrap), refer to the foregoing descriptions. Details are not described herein again.

However, in this embodiment of this application, when the frequency band overlapping rate is 50%, as shown in FIG. 10a, one wrap occurs in the channel use sequence set according to the foregoing formula (2-1) and formula (2-2), and frequency band stitching time is greater than 1 millisecond. Therefore, in this embodiment of this application, when the frequency band overlapping rate is 50%, frequency band stitching time can still be shortened, and sensing performance and a sensing range are not affected (because a transmission interval between channels that overlap in frequency domain is greater than 1 millisecond).

Example 3: A frequency band overlapping rate O between adjacent channels in the channel set A used for frequency band stitching is 75%.

FIG. 11a is a diagram of a channel use sequence when a frequency band overlapping rate is 75% according to an embodiment of this application. As shown in FIG. 11a, m is equal to 8, and when the frequency band overlapping rate is 75%, the channel use sequence set according to the foregoing formula (2-1) and formula (2-2) is CH0, CH3, CH6, CH1, CH4, CH7, CH2, CH5. It can be learned from FIG. 11a that, when the frequency band overlapping rate is 75%, two wraps (wraps) occur in the channel use sequence set according to the foregoing formula (2-1) and formula (2-2). The first wrap occurs on CH1, and the second wrap occurs on CH2. Transmission starts when t = 0, and the first wrap occurs after $t \geq 1$ millisecond. A start time interval between each subsequent wrap and a previous wrap is greater than or equal to 1 millisecond. In other words, when the frequency band overlapping rate O between the adjacent channels is 75%, the channel use sequence meets: From t = 0 to a start of the first wrap (for example, from t = 0 to start time of a fourth SF transmission in FIG. 11a), a center frequency spacing between two channels adjacent in transmission time (for example, CH0 and CH3, and CH3 and CH6 in FIG. 11a) is 374.4 MHz; from a start of each subsequent wrap to a start of a next wrap, a center frequency spacing between two channels adjacent in transmission time (for example, CH1 and CH4, and CH4 and CH7 in FIG. 11a) is also 374.4 MHz; and transmission starts when t = 0, and the first wrap occurs after $t \geq 1$ millisecond, or transmission start time of signals on two channels (for example, CH0 and CH1 in FIG. 11a) between which a frequency band overlapping rate exceeds 25% is greater than or equal to 1 millisecond.

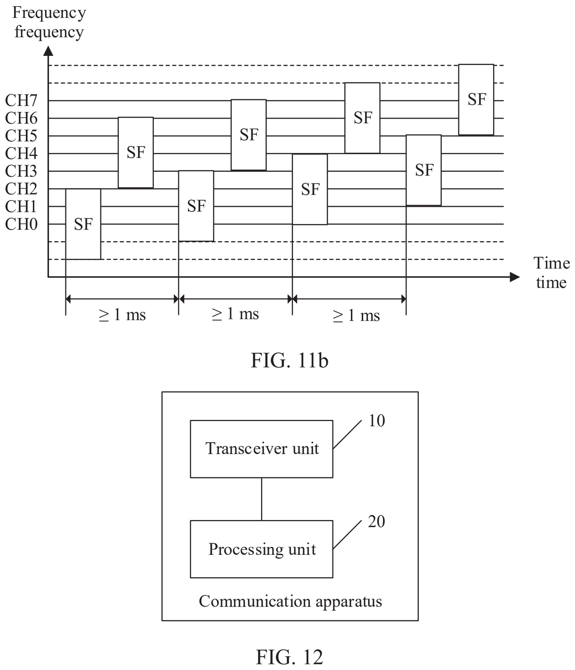

FIG. 11b is a diagram of a channel use sequence when a frequency band overlapping rate is 75% according to the conventional technology. The channel use sequence in FIG. 11b is set according to the foregoing formula (1-1). As shown in FIG. 11b, m is equal to 8, and when the frequency band overlapping rate is 75%, the channel use sequence set according to the foregoing formula (1-1) is CH0, CH4, CH1, CH5, CH2, CH6, CH3, CH7. It can be learned from FIG. 11b that, when the frequency band overlapping rate is 75%, three wraps (wraps) occur in the channel use sequence set according to the foregoing formula (1-1). The first wrap occurs on CH1, the second wrap occurs on CH2, and the third wrap occurs on CH3. Transmission starts when t = 0, and the first wrap occurs after $t \geq 1$ millisecond. A start time interval between each subsequent wrap and a previous wrap is greater than or equal to 1 millisecond. Therefore, in the conventional technology, when the frequency band overlapping rate is 75%, frequency band stitching time is at least greater than 3 millisecond. For a meaning of the wrap (wrap), refer to the foregoing descriptions. Details are not described herein again.

However, in this embodiment of this application, when the frequency band overlapping rate is 75%, as shown in FIG. 11a, two wraps occur in the channel use sequence set according to the foregoing formula (2-1) and formula (2-2), and frequency band stitching time is greater than 2 millisecond. Therefore, in this embodiment of this application, when the frequency band overlapping rate is 75%, the frequency band stitching time can still be shortened, and the sensing performance and the sensing range are not affected (because transmission start time of signals on two channels between which a frequency band overlapping rate exceeds 25% is greater than or equal to 1 millisecond, and a sum of PSDs of signals on two channels between which a frequency band overlapping rate is equal to 25% does not exceed 0 dBr, the transmit power does not back off).

It may be understood that the foregoing channel use sequence is represented by using logical indexes of channels. Because there is a correspondence between a logical index of a channel and a channel number (channel number) of the channel, the channel can be uniquely found by using the channel number (the channel can be determined based on at least two of a center frequency, a bandwidth, a start frequency, and an end frequency). Therefore, in one time of frequency band stitching, physical parameters of the channel used for frequency band stitching, for example, the center frequency and the bandwidth, can be determined based on the logical index of the channel, a frequency band overlapping rate, a reference channel, and whether center frequencies starting from the reference channel are in ascending order or descending order.

For example, it is assumed that a channel number of the reference channel is 5, and a center frequency (center frequency) of the reference channel is 6489.6 MHz. In this case, a start frequency (start frequency) of the reference channel is 6240 MHz, and an end frequency (end frequency) of the reference channel is 6739.2 MHz. It is assumed that the frequency band overlapping rate is 50%, and the center frequencies starting from the reference channel are in ascending order. In this case, the logical index CH0 of the channel represents a reference channel (a center frequency is 6489.6 MHz and a bandwidth is 499.2 MHz), the logical index CH1 represents a channel whose center frequency is 6739.2 MHz and whose bandwidth is 499.2 MHz, the logical index CH2 represents a channel whose center frequency is 6988.8 MHz and whose bandwidth is 499.2 MHz, the logical index CH3 represents a channel whose center frequency is 7238.4 MHz and whose bandwidth is 499.2 MHz, and the rest may be deduced by analogy. Therefore, the transmit end and the receive end (for example, the first communication apparatus and the second communication apparatus) obtain the channel use sequence (represented by the logical indexes), and learn a frequency band (a start frequency band and an end frequency) for transmitting each sensing fragment (SF) in a subsequent frequency band stitching process.

In a possible implementation, the foregoing manner of setting the channel use sequence is not only applicable to a case in which the frequency band overlapping rate is 25%, 50%, or 75%, but also applicable to a case in which the frequency band overlapping rate is 20%, 40%, 60%, or 80%. A difference lies in that values of coefficients b corresponding to different frequency band overlapping rates are different.

For example, b represents a coefficient corresponding to a frequency band overlapping rate. It is defined that a value of the coefficient b is 0 when the frequency band overlapping rate is 20%, a value of the coefficient b is 1 when the frequency band overlapping rate is 40% or 60%, and a value of the coefficient b is 3 when the frequency band overlapping rate is 80%. Alternatively, it is defined that a value of the coefficient b is 0 when the frequency band overlapping rate is 20%, a value of the coefficient b is 1 when the frequency band overlapping rate is 40%, a value of the coefficient b is 2 when the frequency band overlapping rate is 60%, and a value of the coefficient b is 3 when the frequency band overlapping rate is 80%. The channel use sequence is set according to the foregoing formula (2-1). For a meaning represented by each letter in the formula (2-1), refer to the foregoing description. Details are not described herein again. In addition, the channel use sequence may further meet the following conditions: For different values of p*(b+1) DIV (N), a transmission start time interval of signals on channels is greater than or equal to 1 millisecond; or a transmission start time interval of signals on two channels between which a frequency band overlapping rate exceeds 20% is greater than or equal to 1 millisecond; or transmission starts when t = 0, first wrap occurs after t ≥ 1 millisecond, and a start time interval between each subsequent wrap and a previous wrap is greater than or equal to 1 millisecond.

For example, b represents a coefficient corresponding to a frequency band overlapping rate. It is defined that a value of the coefficient b is 1 when the frequency band overlapping rate is 20%, a value of the coefficient b is 2 when the frequency band overlapping rate is 40%, a value of the coefficient b is 3 when the frequency band overlapping rate is 60%, and a value of the coefficient b is 4 when the frequency band overlapping rate is 80%. The channel use sequence is set according to the foregoing formula (2-2). For a meaning represented by each letter in the formula (2-2), refer to the foregoing description. Details are not described herein again. Herein, the coefficient b may be an overlapping factor OF, and b in the formula (2-2) may alternatively be replaced with the overlapping factor OF. In addition, the channel use sequence may further meet the following conditions: For different values of (p*b) DIV (N), a transmission start time interval of signals on channels is greater than or equal to 1 millisecond; or a transmission start time interval of signals on two channels between which a frequency band overlapping rate exceeds 20% is greater than or equal to 1 millisecond; or transmission starts when t = 0, first wrap occurs after t ≥ 1 millisecond, and a start time interval between each subsequent wrap and a previous wrap is greater than or equal to 1 millisecond.

In this embodiment of this application, the rule of the channel use sequence in frequency band stitching is set. This can shorten frequency band stitching time, and can also maintain good sensing performance and a large sensing range in some scenarios.

Implementation 2

A coefficient b of each frequency band overlapping rate may be configured, and a manner of setting the channel use sequence (or a specific formula) may also be configured. The transmit end and the receive end (for example, the first communication apparatus and the second communication apparatus) may obtain the channel use sequence in the frequency band stitching process based on the configured coefficient b and the manner of setting the channel use sequence. In Implementation 2, the control message (CM) may indicate: a frequency band overlapping rate O between adjacent channels in the channel set A used for frequency band stitching, a quantity m of channels used for frequency band stitching, a channel number (Channel number) of a reference channel, whether center frequencies of channels used for frequency band stitching that start from the reference channel are in ascending order or descending order, or a manner of setting the channel use sequence. For example, the control message (CM) may include but is not limited to one or more pieces of content in the following Table 3.

Table 3

| Field (field) | Description (description) |
|---|---|
| Base channel number or channel number (base channel number or channel number) | Channel number of a reference channel (or referred to as a base channel) |
| Frequency stitching direction (frequency stitching direction) | Whether center frequencies starting from the reference channel (or the base channel) are in ascending order or descending order |
| Carrier frequency grid configuration ID (carrier frequency grid configuration identifier) | Frequency band overlapping rate O between adjacent channels |
| Aggregated Bandwidth (aggregated bandwidth) | Total quantity of frequency bands used for frequency band stitching (namely, a quantity m of channels used for frequency band stitching) |
| Channel Sequence Indication (channel sequence indication) | A manner of setting the channel use sequence (for example, the foregoing formula (2-1) or the foregoing formula (2-2)) |

In a possible implementation, the control message (CM) may further indicate one or more of the following: whether frequency band stitching is enabled, a frequency band stitching mode, a coefficient b corresponding to a frequency band overlapping rate, or a CIR feedback format. For example, the control message (CM) may include but is not limited to one or more pieces of content in the following Table 4.

Table 4

| Field (field) | Description (description) |
|---|---|
| Frequency Stitching Control (frequency stitching control) | Whether to enable frequency band stitching and/or a frequency band stitching mode (for example, frequency band stitching using an in-sequence channel order or frequency band stitching using an out-of-sequence channel order) |
| Base channel number or channel number (base channel number or channel number) | Channel number of a reference channel (or referred to as a base channel) |
| Frequency stitching direction (frequency stitching direction) | Whether center frequencies starting from the reference channel (or the base channel) are in ascending order or descending order |
| Carrier frequency grid configuration ID (carrier frequency grid configuration identifier) | Frequency band overlapping rate O between adjacent channels |
| Aggregated Bandwidth (aggregated bandwidth) | Total quantity of frequency bands used for frequency band stitching (namely, a quantity m of channels used for frequency band stitching) |
| Overlapping Coefficient (overlapping coefficient) | Coefficient b |
| Channel Sequence Indication (channel sequence indication) | A manner of setting the channel use sequence (for example, the foregoing formula (2-1) or the foregoing formula (2-2)) |
| Feedback control (feedback control) | Channel impulse response (CIR) feedback format |

A length of the channel sequence indication field may be 1 bit. For example, 0 indicates that the manner of setting the channel use sequence is the foregoing formula (2-1), that is, the channel use sequence meets $CH((p*(b+1) \bmod (N)) + (p*(b+1) \text{ DIV } (N)))$; and 1 indicates that manner of setting the channel use sequence is the foregoing formula (2-2), that is, the channel use sequence meets $CH(((p*b) \bmod (N)) + (p*b) \text{ DIV } (N))$. In this embodiment of this application, whether 0 indicates the formula (2-1) or 1 indicates the formula (2-1) is not limited. Herein, a value of the coefficient b may be predefined. For each time of frequency band stitching, when the frequency band overlapping rate remains unchanged, the value of the coefficient b also remains unchanged. For example, when the manner of setting the channel use sequence is the foregoing formula (2-1), it is defined that a value of the coefficient b is 0 when the frequency band overlapping rate is 25%, a value of the coefficient b is 1 when the frequency band overlapping rate is 50%, and a value of the coefficient b is 2 when the frequency band overlapping rate is 75%. Certainly, the coefficient b may alternatively be configured by the transmit end (for example, the first communication apparatus). In other words, for a same frequency band overlapping rate, the transmit end may configure the coefficient b to different values in different frequency band stitching processes.

For lengths, indication manners, and the like of other fields in Table 3 and Table 4, refer to descriptions of corresponding fields in Table 1 and Table 2. Details are not described herein again. A length, a name, a specific indication manner, and the like of each field in the control message are not limited in this embodiment of this application. A length, a name, a specific indication manner, and the like of each field are all examples, and do not constitute a limitation on the protection scope of this application.

The transmit end and the receive end (that is, the first communication apparatus and the second communication apparatus) may obtain, based on content of the control message, the channel use sequence of the channels in the channel set A used for frequency band stitching. Specifically, for a manner of determining the channel use sequence, refer to related descriptions in the foregoing implementation 1. Details are not described herein again.

In this embodiment of this application, configuring the coefficient b and the manner of setting the channel use sequence in the control message can shorten frequency band stitching time, and can also improve flexibility of the channel use sequence.

Implementation 3

The transmit end and the receive end (for example, the first communication apparatus and the second communication apparatus) agree on a channel use sequence by using a control message (CM). In Implementation 3, the control message (CM) may indicate: a frequency band overlapping rate O between adjacent channels in the channel set A used for frequency band stitching, a quantity m of channels used for frequency band stitching, a channel number (Channel number) of a reference channel, whether center frequencies of channels used for frequency band stitching that start from the reference channel are in ascending order or descending order, or a logical index of a channel used for frequency band stitching. For example, the control message (CM) may include but is not limited to one or more pieces of content in the following Table 5.

Table 5

| Field (field) | Description (description) |
|---|---|
| Base channel number or channel number (base channel number or channel number) | Channel number of a reference channel (or referred to as a base channel) |
| Frequency stitching direction (frequency stitching direction) | Whether center frequencies starting from the reference channel (or the base channel) are in ascending order or descending order |
| Carrier frequency grid configuration ID (carrier frequency grid configuration identifier) | Frequency band overlapping rate O between adjacent channels |
| Aggregated Bandwidth (aggregated bandwidth) | Total quantity of frequency bands used for frequency band stitching (namely, a quantity m of channels used for frequency band stitching) |
| Channel Index (channel index) | Logical index of a channel used for frequency band stitching |

A length of the channel index field may be 4*m bits, and every 4 bits indicate a logical index of one channel. For lengths, indication manners, and the like of other fields in Table 5, refer to descriptions of corresponding fields in Table 1. Details are not described herein again. A length, a name, a specific indication manner, and the like of each field in the control message are not limited in this embodiment of this application. A length, a name, a specific indication manner, and the like of each field are all examples, and do not constitute a limitation on the protection scope of this application.

In a possible implementation, in Implementation 3, a transmission start time interval of signals on two channels between which a frequency band overlapping rate exceeds 20% or 25% may be restricted to be greater than or equal to 1 ms.

The transmit end and the receive end (that is, the first communication apparatus and the second communication apparatus) may obtain, based on content of the control message, the channel use sequence of the channels in the channel set A used for frequency band stitching.

In this embodiment of this application, the transmit end and the receive end agree on the channel use sequence in the control message (CM). This can improve flexibility of the channel use sequence.

In this embodiment of this application, before frequency band stitching, the channel use sequence between the transmit end and the receive end in the frequency band stitching process is aligned based on the control message (CM) and according to a predefined rule of the channel use sequence. This can shorten frequency band stitching time, and can also maintain good sensing performance and a large sensing range in some scenarios. Further, flexibility of the channel use sequence can be further improved.

The foregoing content describes in detail methods provided in this application. To facilitate implementation of the foregoing solutions in embodiments of this application, embodiments of this application further provide corresponding apparatuses or devices.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 12 to FIG. 14.

FIG. 12 is a diagram of a structure of a communication apparatus according to an embodiment of this application. As shown in FIG. 12, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface or a communication unit.

In some embodiments of this application, the communication apparatus may be the first communication apparatus shown above. To be specific, the communication apparatus shown in FIG. 12 may be configured to perform steps, functions, or the like performed by the first communication apparatus in the foregoing method embodiments. For example, the communication apparatus may be the first communication apparatus or a chip, a functional module, or the like configured in the first communication apparatus. This is not limited in this embodiment of this application. The transceiver unit 10 is configured to perform a receiving/sending-related operation of the first communication apparatus in the foregoing method embodiments, and the processing unit 20 is configured to perform a processing-related operation of the first communication apparatus in the foregoing method embodiments.

For example, the processing unit 20 is configured to determine a frequency band overlapping rate between adjacent channels in a channel set used for frequency band stitching; and the transceiver unit 10 is configured to send or output a control message, where the control message indicates the frequency band overlapping rate. When the frequency band overlapping rate belongs to a preset first overlapping rate set, the channel set is in an in-sequence channel order; or when the frequency band overlapping rate belongs to a preset second overlapping rate set, the channel set is in an out-of-sequence channel order. The in-sequence channel order and the out-of-sequence channel order are distinguished based on whether different channels in the channel set are in ascending order or descending order of center frequencies.

For example, the first overlapping rate set includes a frequency band overlapping rate of 25%, and the second overlapping rate set includes a frequency band overlapping rate of 50% and a frequency band overlapping rate of 75%.

It may be understood that the transceiver unit 10 may send the control message to another communication apparatus, or the transceiver unit 10 outputs the control message from the processing unit 20 to another component, another functional module, or the like in the communication apparatus. Related descriptions of outputting other information by the transceiver unit are similar. Details are not described below again.

It may be understood that for specific descriptions of the control message, the frequency band overlapping rate, the first overlapping rate set, the second overlapping rate set, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1 (as shown in FIG. 6). Details are not described herein again.

For example, the processing unit 20 is configured to generate a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the transceiver unit 10 is configured to send or output a control message, where the control message is used to determine a channel use sequence of channels in the channel set.

It may be understood that, for specific descriptions of the control message, the frequency band overlapping rate, the channel use sequence, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2 (as shown in FIG. 8). Details are not described herein again.

Still refer to FIG. 12. In some other embodiments of this application, the communication apparatus may be the second communication apparatus shown above. To be specific, the communication apparatus shown in FIG. 12 may be configured to perform steps, functions, or the like performed by the second communication apparatus in the foregoing method embodiments. For example, the communication apparatus may be the second communication apparatus or a chip, a functional module, or the like configured in the second communication apparatus. This is not limited in this embodiment of this application. The transceiver unit 10 is configured to perform a receiving/sending-related operation of the second communication apparatus in the foregoing method embodiments, and the processing unit 20 is configured to perform a processing-related operation of the second communication apparatus in the foregoing method embodiments.

For example, the transceiver unit 10 is configured to receive or input a control message, where the control message indicates a frequency band overlapping rate between adjacent channels in a channel set used for frequency band stitching; and the processing unit 20 is configured to determine, based on the frequency band overlapping rate indicated by the control message, whether the channel set is in an in-sequence channel order or an out-of-sequence channel order. When the frequency band overlapping rate belongs to a preset first overlapping rate set, the channel set is in the in-sequence channel order; or when the frequency band overlapping rate belongs to a preset second overlapping rate set, the channel set is in the out-of-sequence channel order. The in-sequence channel order and the out-of-sequence channel order are distinguished based on whether different channels in the channel set are in ascending order or descending order of center frequencies.

For example, the first overlapping rate set includes a frequency band overlapping rate of 25%, and the second overlapping rate set includes a frequency band overlapping rate of 50% and a frequency band overlapping rate of 75%.

It may be understood that the transceiver unit 10 may receive a control message from another communication apparatus, or the transceiver unit 10 inputs the control message from another component or another functional module in the second communication apparatus, or the like. Related descriptions of inputting other information by the transceiver unit are similar. Details are not described below again.

It may be understood that for specific descriptions of the control message, the frequency band overlapping rate, the first overlapping rate set, the second overlapping rate set, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1 (as shown in FIG. 6). Details are not described herein again.

For example, the transceiver unit 10 is configured to receive or input a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the processing unit 20 is configured to determine a channel use sequence of channels in the channel set based on the control message.

It may be understood that, for specific descriptions of the control message, the frequency band overlapping rate, the channel use sequence, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2 (as shown in FIG. 8). Details are not described herein again.

The foregoing describes the communication apparatuses in embodiments of this application. The following describes a possible product form of the communication apparatus. It should be understood that a product in any form that has a function of the communication apparatus in FIG. 12 falls within the protection scope of embodiments of this application. It should be further understood that the following descriptions are merely examples, and do not limit the product form of the communication apparatus in embodiments of this application.

In a possible implementation, in the communication apparatus shown in FIG. 12, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application. In a process of performing the foregoing method, the process of sending information (for example, sending a control message) in the foregoing method may be understood as a process of the processor outputting the foregoing information. When outputting the information, the processor outputs the information to the transceiver, so that the transceiver transmits the information. After the information is output by the processor, other processing may further need to be performed on the information before processed information arrives at the transceiver. Similarly, the process of receiving information (for example, receiving a control message) in the foregoing method may be understood as a process of the processor receiving the information that is input above. When the processor receives the input information, the transceiver receives the information, and inputs the information into the processor. Further, after the transceiver receives the information, other processing may further need to be performed on the information before processed information is input into the processor.

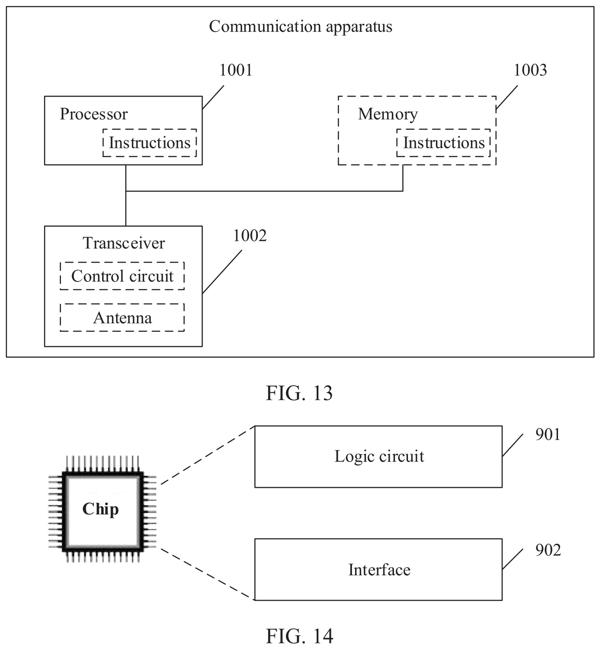

FIG. 13 is a diagram of another structure of a communication apparatus according to an embodiment of this application. The communication apparatus may be a first communication apparatus, a second communication apparatus, or a chip in the first communication apparatus or the second communication apparatus. FIG. 13 shows only main components of the communication apparatus. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be wirelessly sent, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method Embodiment 1, the processor 1001 may be configured to perform step S101 and step S102 in FIG. 6, and/or configured to perform another process of the technology described in this specification; and the transceiver 1002 may be configured to perform step S103 in FIG. 6, and/or configured to perform another process of the technology described in this specification.

For example, when the communication apparatus is configured to perform the steps, methods, or functions performed by the second communication apparatus in the foregoing method Embodiment 1, the processor 1001 may be configured to perform step S104 in FIG. 6, and/or configured to perform another process of the technology described in this specification; and the transceiver 1002 may be configured to receive a control message, and/or configured to perform another process of the technology described in this specification.

For example, when the communication apparatus is configured to perform the steps, methods, or functions performed by the first communication apparatus in the foregoing method Embodiment 2, the processor 1001 may be configured to perform step S201 in FIG. 8, and/or configured to perform another process of the technology described in this specification; and the transceiver 1002 may be configured to perform step S202 in FIG. 8, and/or configured to perform another process of the technology described in this specification.

For example, when the communication apparatus is configured to perform the steps, methods, or functions performed by the second communication apparatus in the foregoing method Embodiment 2, the processor 1001 may be configured to perform step S203 in FIG. 8, and/or configured to perform another process of the technology described in this specification; and the transceiver 1002 may be configured to receive a control message, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those shown in FIG. 13. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 12, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit, the sending unit may be an output interface, the receiving unit may be an input interface, and the sending unit and the receiving unit are integrated into one unit, for example, an input/output interface. FIG. 14 is a diagram of still another structure of a communication apparatus according to an embodiment of this application. As shown in FIG. 14, the communication apparatus shown in FIG. 14 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 14 shows an example in which the communication apparatus is a chip, and the chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform the methods, functions, or steps performed by the first communication apparatus in Embodiment 1, the logic circuit 901 is configured to determine a frequency band overlapping rate between adjacent channels in a channel set used for frequency band stitching; and the interface 902 is configured to output a control message, where the control message indicates the frequency band overlapping rate. When the frequency band overlapping rate belongs to a preset first overlapping rate set, the channel set is in an in-sequence channel order; or when the frequency band overlapping rate belongs to a preset second overlapping rate set, the channel set is in an out-of-sequence channel order. The in-sequence channel order and the out-of-sequence channel order are distinguished based on whether different channels in the channel set are in ascending order or descending order of center frequencies.

For example, when the communication apparatus is configured to perform the methods, functions, or steps performed by the second communication apparatus in Embodiment 1, the interface 902 is configured to input a control message, where the control message indicates a frequency band overlapping rate between adjacent channels in a channel set used for frequency band stitching; and the logic circuit 901 is configured to determine, based on the frequency band overlapping rate indicated by the control message, whether the channel set is in an in-sequence channel order or an out-of-sequence channel order. When the frequency band overlapping rate belongs to a preset first overlapping rate set, the channel set is in the in-sequence channel order; or when the frequency band overlapping rate belongs to a preset second overlapping rate set, the channel set is in the out-of-sequence channel order. The in-sequence channel order and the out-of-sequence channel order are distinguished based on whether different channels in the channel set are in ascending order or descending order of center frequencies.

It may be understood that for specific descriptions of the control message, the frequency band overlapping rate, the first overlapping rate set, the second overlapping rate set, and the like, refer to the method Embodiment 1 shown above. Details are not described herein again.

For example, when the communication apparatus is configured to perform the methods, functions, or steps performed by the first communication apparatus in Embodiment 2, the logic circuit 901 is configured to generate a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the interface 902 is configured to output a control message, where the control message is used to determine a channel use sequence of channels in the channel set.

For example, when the communication apparatus is configured to perform the methods, functions, or steps performed by the second communication apparatus in Embodiment 2, the interface 902 is configured to input a control message, where the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and the logic circuit 901 is configured to determine a channel use sequence of channels in the channel set based on the control message.

It may be understood that, for specific descriptions of the control message, the frequency band overlapping rate, the channel use sequence, and the like, refer to the method Embodiment 2 shown above. Details are not described herein again.

It may be understood that the communication apparatus described in embodiments of this application may implement the method provided in embodiments of this application in a form of hardware, or may implement the method provided in embodiments of this application in a form of software. This is not limited in embodiments of this application.

For specific implementations of the embodiment shown in FIG. 14, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code, and when the computer code is run on a computer, the computer is enabled to perform operations and/or processing performed by the first communication apparatus in the methods provided in this application.

This application further provides a computer-readable storage medium. The computer-readable storage medium stores computer code, and when the computer code is run on a computer, the computer is enabled to perform operations and/or processing performed by the second communication apparatus in the methods provided in this application.

This application further provides a computer program product. The computer program product includes computer code or a computer program, and when the computer code or the computer program is run on a computer, operations and/or processing performed by the first communication apparatus in the methods provided in this application are/is performed.

This application further provides a computer program product. The computer program product includes computer code or a computer program, and when the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information exchange method in an ultra-wideband system, comprising:

    determining, by a communication apparatus, a frequency band overlapping rate between adjacent channels in a channel set used for frequency band stitching; and
    sending, by the communication apparatus, a control message, wherein the control message indicates the frequency band overlapping rate; and
    when the frequency band overlapping rate belongs to a preset first overlapping rate set, the channel set is in an in-sequence channel order; or when the frequency band overlapping rate belongs to a preset second overlapping rate set, the channel set is in an out-of-sequence channel order; and the in-sequence channel order and the out-of-sequence channel order are distinguished based on whether different channels in the channel set are in ascending order or descending order of center frequencies.

2. An information exchange method in an ultra-wideband system, comprising:

    receiving, by a communication apparatus, a control message, wherein the control message indicates a frequency band overlapping rate between adjacent channels in a channel set used for frequency band stitching; and
    determining, by the communication apparatus based on the frequency band overlapping rate indicated by the control message, whether the channel set is in an in-sequence channel order or an out-of-sequence channel order, wherein
    when the frequency band overlapping rate belongs to a preset first overlapping rate set, the channel set is in the in-sequence channel order; or when the frequency band overlapping rate belongs to a preset second overlapping rate set, the channel set is in the out-of-sequence channel order; and the in-sequence channel order and the out-of-sequence channel order are distinguished based on whether different channels in the channel set are in ascending order or descending order of center frequencies.

3. The method according to claim 1 or 2, wherein the first overlapping rate set comprises a frequency band overlapping rate of 25%, and the second overlapping rate set comprises a frequency band overlapping rate of 50% and a frequency band overlapping rate of 75%.

4. The method according to any one of claims 1 to 3, wherein the control message further indicates one or more of the following: a quantity m of channels used for frequency band stitching, a channel number of a reference channel, or whether center frequencies of channels used for frequency band stitching that start from the reference channel are in ascending order or descending order.

5. The method according to claim 4, wherein a channel use sequence of channels in the channel set satisfies:

$$CH((p*(b+1) \ MOD \ (N)) + (p*(b+1) \ DIV \ (N))),$$

    wherein values of p are respectively 0, 1, 2, ..., and (N-1); if the quantity m of channels used for frequency band stitching is an integer multiple of (b+1), N is equal to m; or if the quantity m of channels used for frequency band stitching is not an integer multiple of (b+1), N is a minimum integer multiple of (b+1) in positive integers greater than m; and CH() represents a logical index of a channel, the logical index of the channel corresponds to a channel number of the channel, b represents a coefficient corresponding to a frequency band overlapping rate, MOD represents a modulo operation, and DIV represents integer division; and
    when the frequency band overlapping rate indicated by the control message is 25%, a value of b is 0; when the frequency band overlapping rate indicated by the control message is 50%, a value of b is 1; or when the frequency band overlapping rate indicated by the control message is 75%, a value of b is 2.

6. The method according to claim 5, wherein the channel use sequence further meets any one of the following conditions:

for different values of p*(b+1) DIV (N), a transmission start time interval of signals on channels is greater than or equal to 1 millisecond; or
a transmission start time interval of signals on two channels between which a frequency band overlapping rate exceeds 25% in the channel set used for frequency band stitching is greater than or equal to 1 millisecond.

7. The method according to claim 4, wherein a channel use sequence of channels in the channel set satisfies:

$$CH(((p*b) \text{ MOD } (N)) + (p*b) \text{ DIV } (N)),$$

wherein values of p are respectively 0, 1, 2, ..., and (N-1); if the quantity m of channels used for frequency band stitching is an integer multiple of b, N is equal to m; or if the quantity m of channels used for frequency band stitching is not an integer multiple of b, N is a minimum integer multiple of b in positive integers greater than m; and CH() represents a logical index of a channel, the logical index of the channel corresponds to a channel number of the channel, b represents a coefficient corresponding to a frequency band overlapping rate, MOD represents a modulo operation, and DIV represents integer division; and
when the frequency band overlapping rate indicated by the control message is 25%, a value of b is 1; when the frequency band overlapping rate indicated by the control message is 50%, a value of b is 2; or when the frequency band overlapping rate indicated by the control message is 75%, a value of b is 3.

8. The method according to claim 7, wherein the channel use sequence further meets any one of the following conditions:

for different values of (p*OF) DIV (N), a transmission start time interval of signals on channels is greater than or equal to 1 millisecond; or
transmission start time of signals on two channels between which a frequency band overlapping rate exceeds 25% in the channel set used for frequency band stitching is greater than or equal to 1 millisecond.

9. The method according to claim 4, wherein a channel use sequence of channels in the channel set meets one or more of the following:

when the frequency band overlapping rate is 25%, the channels in the channel set are sequentially transmitted in ascending order or descending order of center frequencies;
when the frequency band overlapping rate is 50%, a center frequency spacing between channels that are adjacent in transmission time in the channel set is greater than or equal to 499.2 MHz; or
when the frequency band overlapping rate is 75%, a center frequency spacing between channels that are adjacent in transmission time in the channel set is greater than or equal to 374.4 MHz.

10. The method according to any one of claims 4 to 9, wherein the control message further indicates one or more of the following: whether frequency band stitching is enabled, a frequency band stitching mode, the coefficient b corresponding to the frequency band overlapping rate, or a manner of setting the channel use sequence of the channels in the channel set; and
the frequency band stitching mode comprises frequency band stitching using the in-sequence channel order and frequency band stitching using the out-of-sequence channel order, and the manner of setting the channel use sequence comprises CH((p*(b+1) MOD (N)) + (p*(b+1) DIV (N))) and CH(((p*b) MOD (N)) + (p*b) DIV (N)).

11. An information exchange method in an ultra-wideband system, comprising:

generating, by a communication apparatus, a control message, wherein the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and
sending, by the communication apparatus, the control message, wherein the control message is used to

**EP 4 712 632 A1**

determine a channel use sequence of channels in the channel set.

12. An information exchange method in an ultra-wideband system, comprising:

receiving, by a communication apparatus, a control message, wherein the control message indicates: a frequency band overlapping rate between adjacent channels in a channel set used for frequency band stitching, a quantity m of channels used for frequency band stitching, a channel number of a reference channel, and whether center frequencies of channels used for frequency band stitching that start from the reference channel are in ascending order or descending order; and
determining, by the communication apparatus, a channel use sequence of channels in the channel set based on the control message.

13. The method according to claim 11 or 12, wherein the channel use sequence satisfies:

$$CH((p*(b+1) \text{ MOD } (N)) + (p*(b+1) \text{ DIV } (N))),$$

wherein values of p are respectively 0, 1, 2, ..., and (N-1); if the quantity m of channels used for frequency band stitching is an integer multiple of (b+1), N is equal to m; or if the quantity m of channels used for frequency band stitching is not an integer multiple of (b+1), N is a minimum integer multiple of (b+1) in positive integers greater than m; and CH() represents a logical index of a channel, the logical index of the channel corresponds to a channel number of the channel, b represents a coefficient corresponding to a frequency band overlapping rate, MOD represents a modulo operation, and DIV represents integer division; and
when the frequency band overlapping rate is 25%, a value of b is 0; when the frequency band overlapping rate is 50%, a value of b is 1; or when the frequency band overlapping rate is 75%, a value of b is 2.

14. The method according to claim 13, wherein the channel use sequence further meets any one of the following conditions:

for different values of p*(b+1) DIV (N), a transmission start time interval of signals on channels is greater than or equal to 1 millisecond; or
a transmission start time interval of signals on two channels between which a frequency band overlapping rate exceeds 25% in the channel set is greater than or equal to 1 millisecond.

15. The method according to claim 11 or 12, wherein the channel use sequence satisfies:

$$CH(((p*b) \text{ MOD } (N)) + (p*b) \text{ DIV } (N)),$$

wherein values of p are respectively 0, 1, 2, ..., and (N-1); if the quantity m of channels used for frequency band stitching is an integer multiple of b, N is equal to m; or if the quantity m of channels used for frequency band stitching is not an integer multiple of b, N is a minimum integer multiple of b in positive integers greater than m; and CH() represents a logical index of a channel, the logical index of the channel corresponds to a channel number of the channel, b represents a coefficient corresponding to a frequency band overlapping rate, MOD represents a modulo operation, and DIV represents integer division; and
when the frequency band overlapping rate is 25%, a value of b is 1; when the frequency band overlapping rate is 50%, a value of b is 2; or when the frequency band overlapping rate is 75%, a value of b is 3.

16. The method according to claim 15, wherein the channel use sequence further meets any one of the following conditions:

for different values of (p*b) DIV (N), a transmission start time interval of signals on channels is greater than or equal to 1 millisecond; or
a transmission start time interval of signals on two channels between which a frequency band overlapping rate exceeds 25% in the channel set is greater than or equal to 1 millisecond.

17. The method according to any one of claims 13 to 16, wherein the control message further indicates a manner of setting the channel use sequence of the channels in the channel set; and

when the manner of setting the channel use sequence is a first manner, the channel use sequence satisfies CH((p*(b+1) MOD (N)) + (p*(b+1) DIV (N))); or
when the manner of setting the channel use sequence is a second manner, the channel use sequence satisfies CH(((p*b) MOD (N)) + (p*b) DIV (N)).

18. The method according to claim 11 or 12, wherein the channel use sequence of the channels in the channel set meets one or more of the following:

when the frequency band overlapping rate is 25%, the channels in the channel set are sequentially transmitted in ascending order or descending order of center frequencies;
when the frequency band overlapping rate is 50%, a center frequency spacing between channels that are adjacent in transmission time in the channel set is greater than or equal to 499.2 MHz; or
when the frequency band overlapping rate is 75%, a center frequency spacing between channels that are adjacent in transmission time in the channel set is greater than or equal to 374.4 MHz.

19. The method according to any one of claims 11 to 18, wherein the control message further indicates one or more of the following: whether frequency band stitching is enabled, a frequency band stitching mode, or the coefficient b corresponding to the frequency band overlapping rate;

the frequency band stitching mode comprises frequency band stitching using an in-sequence channel order and frequency band stitching using an out-of-sequence channel order; and
the in-sequence channel order and the out-of-sequence channel order are distinguished based on whether different channels in the channel set are in ascending order or descending order of center frequencies.

20. A communication apparatus, comprising units or modules configured to perform the method according to any one of claims 1 to 19.

21. A communication apparatus, comprising:

one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 19.

22. A communication apparatus, comprising a logic circuit and an interface, wherein the logic circuit is coupled to the interface; and
the interface is configured to input and/or output code instructions, and the logic circuit is configured to execute the code instructions, to enable the method according to any one of claims 1 to 19 to be executed.

23. A readable storage medium, configured to store a program, wherein the program is executed by one or more processors, to enable an apparatus comprising the one or more processors to perform the method according to any one of claims 1 to 19.

24. A communication system, comprising: a communication apparatus configured to perform the method according to claim 1, and a communication apparatus configured to perform the method according to claim 2; or
a communication apparatus configured to perform the method according to claim 11, and a communication apparatus configured to perform the method according to claim 12.

PAN
coordinator

Full function device

Reduced function device

FIG. 1

PAN
coordinator

Full function device

Reduced function device

FIG. 2

Control on main UWB channel
Control on main UWB channel

Frequency
Frequency

CM    SF    SF    SF

Time
Time

FIG. 3a

Control on all UWB channels
Control on all UWB channels

Frequency
Frequency

| CM | SF | | CM | SF | | CM | SF |

Time
Time

## FIG. 3b

Dedicated control channel
Dedicated control channel
(for example, a narrowband PHY
narrowband physical layer)

CM

Frequency
Frequency

| SF | SF | SF |

Time
Time

## FIG. 3c

FIG. 4

FIG. 5

```
┌──────────────┐                              ┌──────────────┐
│    First     │                              │    Second    │
│communication │                              │communication │
│  apparatus   │                              │  apparatus   │
└──────┬───────┘                              └──────┬───────┘
       │                                             │
┌──────┴───────────────────────┐                     │
│ S101: Determine a frequency   │                    │
│ band overlapping rate O       │                    │
│ between adjacent channels in  │                    │
│ a channel set A used for      │                    │
│ frequency band stitching      │                    │
└──────┬───────────────────────┘                     │
```

S102: Determine, based on the frequency band overlapping rate O, whether the channel set A is in an in-sequence channel order or an out-of-sequence channel order, where when the frequency band overlapping rate O belongs to a preset first overlapping rate set, the channel set A is in the in-sequence channel order; or when the frequency band overlapping rate O belongs to a preset second overlapping rate set, the channel set A is in the out-of-sequence channel order

S103: Send a control message, where the control message indicates the frequency band overlapping rate O

S104: Determine, based on the frequency band overlapping rate O indicated by the control message, whether the channel set A is in the in-sequence channel order or the out-of-sequence channel order

FIG. 6

37

FIG. 7a

FIG. 7b

EP 4 712 632 A1

FIG. 7c

FIG. 7d

First
communication
apparatus

Second
communication
apparatus

S201: Generate a control message, where the
control message indicates: a frequency band
overlapping rate O between adjacent channels in a
channel set A used for frequency band stitching, a
quantity m of channels used for frequency band
stitching, a channel number of a reference channel,
and whether center frequencies of channels used
for frequency band stitching that start from the
reference channel are in ascending order or
descending order

S202: Send the control message, where the
control message is used to determine a channel
use sequence of channels in the channel set A

S203: Determine the channel use
sequence of the channels in the channel
set A based on the control message

FIG. 8

FIG. 9a

FIG. 9b

FIG. 10a

FIG. 10b

FIG. 11a

EP 4 712 632 A1

Frequency
frequency

CH7
CH6
CH5
CH4
CH3
CH2
CH1
CH0

SF SF SF SF SF SF SF SF SF SF

Time
time

≥ 1 ms  ≥ 1 ms  ≥ 1 ms

FIG. 11b

Transceiver unit — 10

Processing unit — 20

Communication apparatus

FIG. 12

47

Communication apparatus

1001                                                    1003

Processor                                              Memory

Instructions                                           Instructions

Transceiver                              1002

Control circuit

Antenna

FIG. 13

Logic circuit                                         901

Chip

Interface                                             902

FIG. 14

## INTERNATIONAL SEARCH REPORT

International application No.

**PCT/CN2024/095149**

| A. | CLASSIFICATION OF SUBJECT MATTER |
| --- | --- |

H04W 72/0453(2023.01)i; H04W28/20(2009.01)i; H04W16/14(2009.01)i

According to International Patent Classification (IPC) or to both national classification and IPC

| B. | FIELDS SEARCHED |
| --- | --- |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS, CNTXT, ENTXTC, DWPI, 3GPP, CNKI: 超宽带, UWB, 频带, 频率, 信道, 重叠, 拼接, 功率回退, 顺序, 乱序, 中心频率, 感知, ultra wide band, band, frequency, overlapping, joint, power backhaul, order, in sequence, out of, central, sense.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022197011 A1 (SAMSUNG ELECTRONICS CO., LTD.) 22 September 2022 (2022-09-22) entire document | 1-24 |
| A | CN 113796145 A (QUALCOMM INC.) 14 December 2021 (2021-12-14) entire document | 1-24 |
| A | CN 115720377 A (HUAWEI TECHNOLOGIES CO., LTD.) 28 February 2023 (2023-02-28) entire document | 1-24 |
| A | WO 2021246297 A1 (NTT DOCOMO, INC.) 09 December 2021 (2021-12-09) entire document | 1-24 |
| A | WO 2022267309 A1 (SPREADTRUM COMMUNICATIONS (SHANGHAI) CO., LTD.) 29 December 2022 (2022-12-29) entire document | 1-24 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 June 2024** | **04 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 712 632 A1

| INTERNATIONAL SEARCH REPORT | | | | International application No. |
|---|---|---|---|---|
| Information on patent family members | | | | **PCT/CN2024/095149** |

| Patent document cited in search report | | | Publication date (day/month/year) | Patent family member(s) | | | Publication date (day/month/year) |
|---|---|---|---|---|---|---|---|
| WO | 2022197011 | A1 | 22 September 2022 | KR | 20220128803 | A | 22 September 2022 |
| CN | 113796145 | A | 14 December 2021 | EP | 3970436 | A1 | 23 March 2022 |
| | | | | EP | 3970436 | B1 | 06 March 2024 |
| | | | | WO | 2020232079 | A1 | 19 November 2020 |
| | | | | US | 2020367241 | A1 | 19 November 2020 |
| | | | | US | 11528703 | B2 | 13 December 2022 |
| CN | 115720377 | A | 28 February 2023 | None | | | |
| WO | 2021246297 | A1 | 09 December 2021 | JP | 2023102792 | A | 26 July 2023 |
| WO | 2022267309 | A1 | 29 December 2022 | None | | | |

Form PCT/ISA/210 (patent family annex) (July 2022)

**REFERENCES CITED IN THE DESCRIPTION**

**Patent documents cited in the description**

- CN 202310673026